# EUROPÄISCHE PATENTANMELDUNG

(11) **EP 4 667 170 A1**
(43) Veröffentlichungstag der Anmeldung: **24.12.2025**
(21) Anmeldenummer: 25183582.3
(22) Anmeldetag: 18.06.2025
(51) Int. Cl.: B25J 15/00, B25J 15/06

(54) **MAGNETGREIFER, MAGNETGREIFER-VORRICHTUNG UND GREIF-VORRICHTUNG ZUM GREIFEN EINES FERROMAGNETISCHEN WERKSTÜCKS UND GREIF-SYSTEM**

(30) Priorität: 20.06.2024 DE 102024117380
(71) Anmelder: J. Schmalz GmbH, 72293 Glatten (DE)
(72) Erfinder: Eberhardt, Tobias, 72293 Glatten (DE)
(74) Vertreter: DREISS Patentanwälte PartG mbB

(57) **Zusammenfassung**

Magnetgreifer (1o, 104, 106, 204, 2o6) zum Greifen eines ferromagnetischen Werkstücks (36, 202). Der Magnetgreifer (1o, 104, 106, 204, 2o6) weist eine Magnet-Einrichtung (18), eine Überführungs-Einrichtung (20) und eine Werkstück-Kontaktfläche (22) auf. Die Magnet-Einrichtung (18) ist aus einer Anzahl von Permanentmagneten (26) mit einem Nordpol und einem Südpol gebildet und ist zwischen einem Greifzustand zum Greifen des ferromagnetischen Werkstücks (36, 202) und einem Freigabezustand zum Freigeben des ferromagnetischen Werkstücks (36, 202) überführbar. Die Überführungs-Einrichtung (20) ist zum Überführen der Magnet-Einrichtung (18) zwischen dem Greifzustand und dem Freigabezustand ausgebildet. Die Werkstück-Kontaktfläche (22) ist zum Kontaktieren des ferromagnetischen Werkstücks (36, 202) ausgebildet.

## Beschreibung

Die Erfindung betrifft einen Magnetgreifer, eine Magnetgreifer-Vorrichtung und eine Greif-Vorrichtung zum Greifen eines ferromagnetischen Werkstücks sowie ein Greif-System.

Typischerweise werden solche Einrichtungen für das Handhaben von ferromagnetischen Werkstücken verwendet. Die Anforderungen hängen dabei stark von der Geometrie und den Materialeigenschaften der zu greifenden Werktücke (Kleinteile, Bleche usw.) sowie von der zu lösenden Handhabungsaufgabe bzw. Greifaufgabe ab (Positionieren, Entstapeln, Vereinzeln usw.).

Der Erfindung liegt als Aufgabe zugrunde, ein sicheres Greifen von ferromagnetischen Werkstücken zu ermöglichen und spezielle Greifaufgaben, wie beispielsweise das Entstapeln von Blechen oder das Greifen und Vereinzeln von empfindlichen und/oder labilen Werkstücken, zu lösen.

Die Erfindung löst diese Aufgabe durch einen Magnetgreifer mit den Merkmalen des Anspruchs 1, einer Magnetgreifer-Vorrichtung mit den Merkmalen des Anspruchs 7, einer Greif-Vorrichtung mit den Merkmalen des Anspruchs 11 und einem Greif-System mit den Merkmalen des Anspruchs 12. Vorteilhafte Ausgestaltungen und Weiterbildungen der Erfindung ergeben sich aus den abhängigen Ansprüchen.

Ein erfindungsgemäßer Magnetgreifer ist zum Greifen eines ferromagnetischen Werkstücks ausgelegt. Der Magnetgreifer weist eine Magnet-Einrichtung, eine Überführungs-Einrichtung und eine Werkstück-Kontaktfläche auf. Die Magnet-Einrichtung ist aus einer Anzahl von Permanentmagneten mit jeweils einem Nordpol und einem Südpol gebildet. Grundsätzlich kann zunächst ein Permanentmagnet ausreichend sein. Vorteilhaft kann aber sein, eine Mehrzahl (zumindest zwei) Permanentmagnete vorzusehen. Weiter Vorteilhaft ist eine Vielzahl, insbesondere mehr als zwei Permanentmagnete vorzusehen. Insofern kann die genannte Anzahl beispielsweise 1, 2, 3, 6, 12, 24 oder 48 sein. Die Magnet-Einrichtung ist zwischen einem Greifzustand zum Greifen des ferromagnetischen Werkstücks und einem Freigabezustand zum Freigeben des ferromagnetischen Werkstücks überführbar. Hierzu ist die Überführungs-Einrichtung vorgesehen, welche dazu ausgebildet ist, die Magnet-Einrichtung zwischen dem Greifzustand und dem Freigabezustand zu überführen, d.h. kontrolliert in den Greifzustand oder den Freigabezustand zu schalten, je nachdem, welcher Zustand gewünscht ist. Die Werkstück-Kontaktfläche ist zum Kontaktieren des ferromagnetischen Werkstücks ausgebildet.

Vorteilhafterweise kann durch das Vorsehen der Anzahl von Permanentmagneten ermöglicht werden, dass das ferromagnetische Werkstück mittels des Magnetgreifers besonders sicher gegriffen werden kann. Weiter kann die Anzahl von Permanentmagneten ermöglichen, dass spezielle Kaufaufgaben, wie beispielsweise das Stapel von Blechen, gelöst werden können.

Ein weiterer Aspekt des Magnetgreifers kann sein, dass durch die Anzahl von Permanentmagneten, insbesondere durch mehrere Permanentmagnete, eine durchgängigere und konstantere Magnetkraft auf das ferromagnetische Werkstück wirken kann, wodurch das ferromagnetische Werkstück mittels des Magnetgreifers besonders sicher gegriffen wird. Auch können die Anzahl von Permanentmagneten einen flexiblen Aufbau des Magnetgreifers ermöglichen, wodurch eine Modularisierung des Magnetgreifers in Form eines Baukastensystems erzielt werden kann.

Der Magnetgreifer kann eine Handhabungs-Schnittstelle zum Befestigen des Magnetgreifers an einer Handhabungsvorrichtung aufweisen. Die Handhabungsvorrichtung kann als ein Manipulator, beispielsweise in Form eines Roboterarms, ausgebildet sein. Die Handhabungs-Schnittstelle kann vorteilhafterweise ein besonders einfaches und schnelles Anschließen des Magnetgreifers an die Handhabungsvorrichtung ermöglichen. Die Handhabungs-Schnittstelle kann zum werkzeuglosen Befestigen des Magnetgreifers an die Handhabungsvorrichtung und/oder zum werkzeuglosen Lösen des Magnetgreifers von der Handhabungsvorrichtung ausgebildet sein. Die Handhabungs-Schnittstelle kann als Schnellkupplung, beispielsweise in Form eines Bajonettverschlusses, ausgebildet sein.

Die Handhabungs-Schnittstelle und die Werkstück-Kontaktfläche können vorzugsweise voneinander elektrisch isoliert sein.

Der Magnetgreifer kann eine Adapterplatte mit der Handhabungs-Schnittstelle aufweisen. Die Adapterplatte kann vorzugsweise aus einem elektrisch isolierenden Material, insbesondere zum elektrischen Isolieren der Handhabungs-Schnittstelle von der Werkstück-Kontaktfläche, gebildet sein. Das Material der Adapterplatte kann ein Kunststoff, insbesondere ein Polyamid, sein. Die Adapterplatte und die Werkstück-Kontaktfläche können an entgegengesetzten Enden des Magnetgreifers angeordnet sein. Die Adapterplatte kann zumindest teilweise eine Stirnseite des Magnetgreifers bilden.

Das ferromagnetische Werkstück kann aus Eisen oder Stahl gebildet sein. Das Werkstück kann ein Blech oder eine Materialtafel sein. Das Werkstück kann labil ausgebildet sein. Insbesondere kann eine Breite und/oder eine Länge des Werkstücks mehr als das Fünffache, insbesondere das zehnfache, einer Dicke des Werkstücks betragen. Die Dicke des Werkstücks kann beispielsweise ein Betrag in einem Bereich von 0,5 mm (Millimeter) bis 5 cm (Zentimeter), insbesondere 0,5 mm bis 5 mm, aufweisen.

Unter der Werkstück-Kontaktfläche kann eine Fläche des Magnetgreifers verstanden werden, an welcher das gegriffene ferromagnetische Werkstück anliegt. Die Werkstück-Kontaktfläche kann eine Fläche des Magnetgreifers sein, die mit dem gegriffenen ferromagnetischen Werkstück einen berührenden Kontakt ausbildet. Die Werkstück-Kontaktfläche kann als Anlagefläche für das ferromagnetische Werkstück bezeichnet werden.

Die Werkstück-Kontaktfläche kann eben ausgebildet sein. Dies kann sinnvoll sein, da bei Werkstücken mit üblichen Größenverhältnissen der Anlagebereich für den Magnetgreifer oft zumindest näherungsweise eben ist. Auch für das Entstapeln eines Stapels aus magnetischen Blechen o.ä. ist eine ebene Werkstück-Kontaktfläche oftmals sinnvoll. Eine unebene, z.B. gewölbte, Werkstück-Kontaktfläche kann hingegen dann sinnvoll sein, wenn das Werkstück an einem entsprechen unebenen, z.B. gewölbten, Bereich kontaktiert werden soll.

Die Werkstück-Kontaktfläche kann eine Stirnfläche des Magnetgreifers zumindest abschnittsweise bilden. Die Werkstück-Kontaktfläche kann an einem Ende des Magnetgreifers angeordnet sein.

Der Magnetgreifer kann ein Gehäuse aufweisen. In dem Gehäuse kann die Magnet-Einrichtung und/oder die Überführungs-Einrichtung angeordnet sein. Das Gehäuse kann nicht magnetisierbar ausgebildet sein. Das Gehäuse kann aus einem nicht-ferromagnetischen Material, beispielsweise Aluminium, gebildet sein.

Das Gehäuse kann länglich ausgebildet sein. Das Gehäuse kann sich entlang einer Längsachse des Gehäuses und/oder einer Längsachse des Magnetgreifers erstrecken. Die Längsachse des Magnetgreifers und die Längsachse des Gehäuses können gleich sein.

Das Gehäuse kann die Werkstück-Kontaktfläche vollständig oder abschnittsweise aufweisen. Insbesondere kann zumindest einen Abschnitt der Werkstück-Kontaktfläche eine Fläche des Gehäuses sein. Anders formuliert, das Gehäuse kann die Werkstück-Kontaktfläche abschnittsweise oder vollständig bilden.

Die Magnet-Einrichtung kann mindestens fünf, insbesondere neun, Permanentmagneten aufweisen.

Jeder Permanentmagnet kann auch als Dauermagnet bezeichnet werden. Jeder Permanentmagnet kann von dem Gehäuse getragen sein. Das Gehäuse kann einen Innenraum aufweisen, in dem jeder Permanentmagnet angeordnet ist.

Jeder Permanentmagnet kann dazu ausgebildet sein, ein Magnetfeld zu erzeugen. Das Magnetfeld von jedem Permanentmagneten kann sich von dem Nordpol zu dem Südpol des Permanentmagneten erstrecken. Die Magnetfelder aller Permanentmagneten der Magnet-Einrichtung können das Magnetfeld der Magnet-Einrichtung bilden. Die Permanentmagnete können derart relativ zueinander angeordnet sein, dass sich deren Magnetfelder, insbesondere in dem Freigabezustand und/oder in dem Greifzustand, einander unter Bildung des Magnetfelds der Magnet-Einrichtung überlagern.

Die Permanentmagnete können linienartig, insbesondere unter Bildung einer Permanentmagnet-Reihe, oder flächenartig, insbesondere unter Bildung einer Permanentmagneten-Matrix, angeordnet sein. Unter der Permanentmagnet-Matrix kann ein Permanentmagnet-Raster oder ein Permanentmagnet-Gitter verstanden werden.

Die Magnet-Einrichtung kann mindestens zwei Permanentmagnete aufweisen, die unter Bildung der Permanentmagneten-Reihe, insbesondere nebeneinander, angeordnet sind.

Die Magnet-Einrichtung kann mindestens vier Permanentmagnete aufweisen, die unter Bildung der Permanentmagneten-Matrix, insbesondere nebeneinander, angeordnet sind. Wenn die Magnet-Einrichtung beispielsweise genau vier Permanentmagnete aufweist, können die Permanentmagnete unter Bildung einer 2x2-Permanentmagneten-Matrix angeordnet sein.

Die Magnet-Einrichtung kann einteilig ausgebildet sein. Insbesondere kann die Magnet-Einrichtung eine Mehrzahl, insbesondere mindestens zwei, von Permanentmagneten aufweisen und einteilig ausgebildet sein. Jeder Permanentmagnet kann ein Segment der Magnet-Einrichtung bilden. Anders formuliert, die Magnet-Einrichtung kann mehrpolig magnetisiert sein.

Die Permanentmagnete können für das Bilden der Magnet-Einrichtung, insbesondere in dem Freigabezustand und/oder in dem Greifzustand, nebeneinander angeordnet sein. Insbesondere können die Anzahl von Permanentmagneten unter Bildung der Permanentmagnet-Reihe aneinandergereiht sein. Die Permanentmagnet-Reihe kann durch ein, insbesondere lineares, nebeneinander Anordnen der Anzahl von Permanentmagneten gebildet sein. Alternativ können die Anzahl von Permanentmagneten unter Bildung der Permanentmagnet-Matrix aneinander angeordnet sein. Die Permanentmagnet-Matrix kann durch das Anordnen der Anzahl von Permanentmagneten in Zeilen und Spalten gebildet sein.

Die Anzahl von Permanentmagneten können derart angeordnet sein, dass zumindest zwei benachbarte Permanentmagnete einen berührenden Kontakt zwischen sich ausbilden. Insbesondere kann jeder Permanentmagnet mindestens einen berührenden Kontakt zu einem benachbarten Permanentmagneten aufweisen.

In dem Greifzustand kann die Magnet-Einrichtung ein Magnetfeld erzeugen, das dazu ausgebildet ist, das ferromagnetische Werkstück mit einer auf die Werkstück-Kontaktfläche gerichteten Magnetkraft zu beaufschlagen, die vorzugsweise größer als eine Gewichtskraft des ferromagnetischen Werkstücks ist. Insbesondere kann die Magnet-Einrichtung dazu ausgebildet sein, in dem Greifzustand das ferromagnetische Werkstück zum Zweck des Greifens des ferromagnetischen Werkstücks mittels einer Magnetkraft gegen die Werkstück-Kontaktfläche zu drücken oder zu pressen.

In dem Freigabezustand kann die Magnet-Einrichtung kein Magnetfeld erzeugen, das dazu ausgebildet ist, das ferromagnetische Werkstück mit einer auf die Werkstück-Kontaktfläche gerichteten Magnetkraft zu beaufschlagen, die größer als eine Gewichtskraft des ferromagnetischen Werkstücks ist. Insbesondere kann die Magnet-Einrichtung dazu ausgebildet sein, in dem Freigabezustand das ferromagnetische Werkstück zum Zweck des Freigebens des ferromagnetischen Werkstücks nicht mittels einer Magnetkraft gegen die Werkstück-Kontaktfläche zu drücken oder zu pressen.

Der Magnetgreifer kann eine Anzahl, insbesondere 1 oder 2, von Polschuhe aufweisen. Jeder Polschuh kann zum Führen eines Magnetfeldanteils des Magnetfelds der Magnet-Einrichtung zu der Werkstück-Kontaktfläche, insbesondere zu dem ferromagnetischen Werkstück, zum Greifen des ferromagnetischen Werkstücks ausgebildet sein. Jeder Polschuh kann aus einem Material gebildet sein, das die Eigenschaft hat, Magnetfelder zu verstärken und/oder zu leiten. Jeder Polschuh kann aus einem ferromagnetischen Material, insbesondere Eisen, Stahl, Nickel oder Kobalt, gebildet sein.

Jeder Polschuh kann an dem Gehäuse lösbar befestigt sein, beispielsweiße mittels einer Schraubverbindung. Vorteilhafterweise können dadurch die Polschuhe getauscht werden, beispielsweise wenn die Polschuhe abgenutzt sind oder wenn für das Erfüllen einer speziellen Greifaufgabe andere Polschuhe mit speziellen Eigenschaften verwendet werden sollen.

Die Anzahl von Polschuhe können die Werkstück-Kontaktfläche vollständig oder abschnittsweise aufweisen. Insbesondere kann zumindest einen Abschnitt der Werkstück-Kontaktfläche eine Fläche eines Polschuhs sein. Anders formuliert, die Anzahl von Polschuhe können die Werkstück-Kontaktfläche abschnittsweise oder vollständig bilden.

Der Magnetgreifer kann einen Aufsatz, der die Werkstück-Kontaktfläche aufweist, aufweisen. Der Aufsatz kann auf das Gehäuse des Magnetgreifers aufsetzbar, insbesondere aufsteckbar oder aufschraubbar, sein. Der Aufsatz kann beispielsweise durch ein Kunststoff-Spritzgussteil oder ein Teil aus Gummi bereitgestellt sein. Vorteilhafterweise kann dadurch eine Beschädigung des ferromagnetischen Werkstücks während dem Greifen reduziert oder ganz vermieden werden.

Die Anzahl von Permanentmagneten kann in dem Gehäuse linear verschiebbar, insbesondere entlang der Längsachse des Magnetgreifers oder in eine zu der Werkstück-Kontaktfläche orthogonalen Richtung, und/oder drehbeweglich, insbesondere um eine Querachse des Magnetgreifers, gelagert sein.

Die Magnet-Einrichtung kann durch eine Translationsbewegung der Anzahl von Permanentmagneten zwischen dem Greifzustand und dem Freigabezustand überführbar sein. Die Translationsbewegung kann eine gerade Bewegung sein, insbesondere eine Vertikalbewegung. Beispielsweise kann die Magnet-Einrichtung durch eine lineare Verschiebung der Anzahl von Permanentmagneten, insbesondere in eine zu der Längsachse des Magnetgreifers parallelen Richtung oder in eine zu der Werkstück-Kontaktfläche orthogonalen Richtung, zwischen dem Greifzustand und dem Freigabezustand überführbar sein.

Beispielsweise kann das Überführen von dem Freigabezustand in den Greifzustand durch eine lineare Verschiebung der Anzahl von Permanentmagneten innerhalb des Gehäuses auf die Werkstück-Kontaktfläche zu erfolgen. Das Überführen von dem Greifzustand in den Freigabezustand kann durch eine lineare Verschiebung der Anzahl von Permanentmagneten innerhalb des Gehäuses von der Haltefläche weg erfolgen.

Zusätzlich oder alternativ kann die Magnet-Einrichtung durch eine Rotationsbewegung der Anzahl von Permanentmagneten zwischen dem Greifzustand und dem Freigabezustand überführbar sein. Beispielsweise kann jeder zweite Permanentmagnet oder alle Permanentmagneten um 180° gedreht werden, um die Magnet-Einrichtung zwischen dem Greifzustand und dem Freigabezustand zu überführen.

Wenn die Anzahl von Permanentmagneten durch eine Rotationsbewegung zwischen dem Freigabezustand und dem Greifzustand überführbar sind, kann jeder Permanentmagnet aus zwei voneinander separat ausgebildete Permanentmagnet-Segmente gebildet sein, die zum Überführen zwischen dem Freigabezustand und dem Greifzustand gegeneinander verdreht werden. Dadurch können die Magnetfelder der beiden Permanentmagnet-Segmente in dem Freigabezustand sich aufheben oder in dem Greifzustand sich nicht aufheben, insbesondere in dem Greifzustand sich verstärken.

Die Überführungs-Einrichtung kann zum Antreiben der Translationsbewegung und/oder der Rotationsbewegung ausgebildet sein. Insbesondere kann die Überführungs-Einrichtung dazu ausgebildet sein, die Anzahl von Permanentmagneten pneumatisch, elektrisch oder mechanisch zum Zweck des Überführens der Magnet-Einrichtung zwischen dem Greifzustand und dem Freigabezustand zu bewegen.

Die Überführungs-Einrichtung kann einen Aktuator zum Überführen der Magnet-Einrichtung zwischen dem Greifzustand und dem Freigabezustand aufweisen. Der Aktuator kann dazu ausgebildet sein, die Translationsbewegung und/oder die Rotationsbewegung der Anzahl von Permanentmagneten anzutreiben. Der Aktuatoren kann ein Elektromotor, ein elektrischer Linearantrieb, ein Hebel und/oder ein pneumatischer Antrieb sein. Insbesondere kann der Aktuator als Pneumatik-Kolben ausgebildet sein, der mit der Anzahl von Permanentmagneten mittelbar oder unmittelbar verbunden ist. Das Gehäuse kann einen Pneumatik-Zylinder aufweisen, in dem der Pneumatik-Kolben angeordnet ist.

Zusätzlich oder alternativ kann die Magnet-Einrichtung durch eine Translationsbewegung von zumindest einem ferromagnetischen Blech des Magnetgreifers zwischen dem Greifzustand und dem Freigabezustand überführbar sein. Beispielsweise kann das ferromagnetischen Blech zum Zweck des Überführens der Magnet-Einrichtung zwischen dem Greifzustand und dem Freigabezustand in die Magnet-Einrichtung einsetzbar oder entnehmbar sein. Die Überführungs-Einrichtung, insbesondere der Aktuator, kann dazu ausgebildet sein, das Blech in die Magnet-Einrichtung einzusetzen oder zu entnehmen.

Zusätzlich oder alternativ kann der Magnetgreifer eine Anzahl von weiteren Permanentmagneten zum Überführen der Magnet-Einrichtung zwischen dem Greifzustand und dem Freigabezustand aufweisen. Beispielsweise kann die Anzahl von weiteren Permanentmagneten zum Zweck des Überführens der Magnet-Einrichtung zwischen dem Greifzustand und dem Freigabezustand in die Magnet-Einrichtung einsetzbar oder entnehmbar sein. Die Überführungs-Einrichtung, insbesondere der Aktuator, kann dazu ausgebildet sein, die Anzahl von weiteren Permanentmagneten in die Magnet-Einrichtung einzusetzen oder zu entnehmen. Dadurch können in dem eingesetzten Zustand die Magnetfelder der weiteren Permanentmagneten die Magnetfelder der Permanentmagneten schwächen, insbesondere aufheben, oder in dem entnommenen Zustand nicht schwächen. In dem eingesetzten Zustand kann die Magnet-Einrichtung den Freigabezustand und in dem entnommenen Zustand den Greifzustand aufweisen.

Zusätzlich oder alternativ kann der Magnetgreifer eine Anzahl von Spulen zum Überführen der Magnet-Einrichtung zwischen dem Greifzustand und dem Freigabezustand aufweisen. Jede Spule kann mindestens eine Wicklung eines Stromleiters aus Draht aufweisen. Jede Spule kann einen Spulenkörper aufweisen, auf dem die Wicklung gewickelt ist. Der Spulenkörper kann einen weichmagnetischen Kern aufweisen. Eine Anzahl der Spulen kann gleich der Anzahl der Permanentmagneten sein. Jedem Permanentmagneten kann eine Spule zugeordnet sein. Beispielsweise kann die Anzahl von Spulen zum Zweck des Überführens der Magnet-Einrichtung zwischen dem Greifzustand und dem Freigabezustand mit elektrischem Strom bestromt werden. Durch das Bestromen der Spulen mit elektrischem Strom kann mittels den Spulen ein Magnetfeld erzeugt werden, das dem Magnetfeld der Anzahl von Permanentmagneten entgegengesetzt gerichtet ist. Dadurch kann das Magnetfeld der Anzahl von Permanentmagneten bei Bestromung der Spulen geschwächt, insbesondere neutralisiert, werden, wodurch der Magnetgreifer den Freigabezustand aufweist. Bei nicht Bestromung der Spulen kann der Magnetgreifer den Greifzustand aufweisen. Die Überführungs-Einrichtung kann als Spannungsquelle für das Bestromen der Spulen ausgebildet sein. Die Spulen können mit der Überführungs-Einrichtung in Form der Spannungsquelle elektrisch verbunden sein.

Der Magnetgreifer kann einen Detektor zum Erfassen des Greifzustands und/oder des Freigabezustands aufweisen. Insbesondere kann der Detektor dazu ausgebildet sein, eine Position der Magnet-Einrichtung, insbesondere in dem Gehäuse, zu erfassen.

Der Magnetgreifer kann eine Steuereinrichtung zum Steuern der Überführungs-Einrichtung, insbesondere des Aktuators, aufweisen. Die Steuereinrichtung kann einen Mikrocontroller aufweisen. Die Steuereinrichtung kann dazu ausgebildet sein, das Überführen der Magnet-Einrichtung zwischen dem Greifzustand und dem Freigabezustand durch Ansteuern der Überführungs-Einrichtung, insbesondere des Aktuators, zu initiieren und/oder zu steuern. Dies kann in Abhängigkeit von dem mittels des Detektors erfassten Greifzustand oder dem erfassten Freigabezustand erfolgen.

In dem Greifzustand kann die Magnet-Einrichtung mit einem Abstand von der Werkstück-Kontaktfläche beabstandet sein. Durch ein Einstellen des Abstands kann die in dem Greifzustand auf das ferromagnetische Werkstück wirkende Magnetkraft eingestellt werden. Insbesondere kann durch das Einstellen des Abstands das durch die Werkstück-Kontaktfläche durchdringende Magnetfeld der Magnet-Einrichtung eingestellt werden, wodurch das Einstellen der auf das ferromagnetische Werkstück wirkenden Magnetkraft ermöglicht wird.

Die Steuereinrichtung kann dazu ausgebildet sein, den Abstand basierend auf der mit dem Detektor detektierten Position der Magnet-Einrichtung zu ermitteln. Die Steuereinrichtung kann dazu ausgebildet sein, das Überführen in den Greifzustand derart zu steuern, dass die Magnet-Einrichtung mit einem Soll-Abstand von der Werkstück-Kontaktfläche beabstandet ist. Die Steuereinrichtung kann dazu ausgebildet sein, den Soll-Abstand basierend auf einer vorgegebenen Magnetkraft zu ermitteln. Die vorgegebene Magnetkraft kann eine maximale Magnetkraft sein, mit welcher das ferromagnetische Werkstück beaufschlagbar ist, ohne dass das ferromagnetische Werkstück durch die Magnetkraft beschädigt wird.

Mit anderen Worten, die Steuereinrichtung kann dazu ausgebildet sein, die Überführungs-Einrichtung zum Reduzieren oder zum Erhöhen des in dem Greifzustand durch die Werkstück-Kontaktfläche durchdringenden Magnetfelds der Magnet-Einrichtung anzusteuern.

Das Einstellen der auf das ferromagnetische Werkstück wirkenden Magnetkraft mittels der Steuereinrichtung kann segmentweise erfolgen. Dadurch kann das Magnetfeld der Magnet-Einrichtung an eine Geometrie des ferromagnetischen Werkstücks eingepasst werden.

Der Magnetgreifer kann eine Sensor-Einrichtung mit einem oder mehreren, beispielsweise 2, 4 oder 6, Anwesenheitssensoren aufweisen. Die Sensor-Einrichtung, insbesondere jeder Anwesenheitssensor, kann dazu ausgebildet sein, zu erfassen, ob sich das ferromagnetische Werkstück an der Werkstück-Kontaktfläche befindet, insbesondere anliegt. Jeder Anwesenheitssensor kann als ein mechanischer Taster, als ein optischer Sensor oder als ein induktiver Sensor, insbesondere als Magnetfeldsensor, vorzugsweise Hall-Sensor, ausgebildet sein.

Die Sensor-Einrichtung, insbesondere jeder Anwesenheitssensor, kann dazu ausgebildet sein, eine Dicke des ferromagnetischen Werkstücks und/oder das unter dem ferromagnetischen Werkstück befindliche Material zu detektieren. Die Steuereinrichtung kann dazu ausgebildet sein, das Überführen der Magnet-Einrichtung zwischen dem Greifzustand und dem Freigabezustand in Abhängigkeit von der mit der Sensor-Einrichtung detektierten Dicke des ferromagnetischen Werkstücks und/oder das mit der Sensor-Einrichtung detektierte unter dem ferromagnetischen Werkstück befindliche Material zu initiieren und/oder zu steuern. Vorteilhafterweise kann dadurch eine Klassifizierung und Überprüfung des ferromagnetischen Werkstücks und/oder eine Einstellung der für das Greifen des ferromagnetischen Werkstücks erforderliche Magnetkraft erfolgen. Insbesondere kann durch das Detektieren der Dicke des ferromagnetischen Werkstücks die Magnetkraft für das Greifen des ferromagnetischen Werkstücks derart eingestellt werden, dass ein Durchbiegen und/oder eine Beschädigung des ferromagnetischen Werkstücks verhindert wird.

Ein weiterer Aspekt der Sensor-Einrichtung, insbesondere der Anwesenheitssensoren, kann sein, dass dadurch eine Bauteilsortierung ermöglicht wird, eine Restmagnetismus verringert wird und/oder eine Qualitätskontrolle des Bauteils erfolgen kann.

Ein weiterer Aspekt der Magneteinrichtung kann sein, dass die Anzahl von Permanentmagneten derart angeordnet ist, dass auf das ferromagnetische Werkstück eine gleichmäßig verteilte Magnetkraft wirkt.

Ein weiterer Aspekt des Magnetgreifers kann sein, dass durch die Anzahl von Permanentmagneten, insbesondere durch mehrere Permanentmagneten, ein segmentweises Zu- und Abschalten einzelner Permanentmagneten ermöglicht wird. Dadurch kann der Magnetgreifer an unterschiedlich ausgebildete ferromagnetische Werkstücke angepasst werden, weshalb der Magnetgreifer besonders flexibel verwendbar ist.

In einer Weiterbildung des Magnetgreifers weist die Magnet-Einrichtung eine, insbesondere im Greifzustand, der Werkstück-Kontaktfläche zugewandte erste Seite und eine, insbesondere im Greifzustand, der Werkstück-Kontaktfläche abgewandte zweite Seite auf. Die Anzahl von Permanentmagneten sind derart angeordnet, dass eine magnetische Flussdichte des Magnetfelds der Magnet-Einrichtung an oder durch die erste Seite höher ist als eine magnetische Flussdichte der Magnet-Einrichtung an oder durch die zweite Seite. Vorteilhafterweise kann dadurch die Magnet-Einrichtung besonders kompakt ausgebildet werden, wodurch ein Platzersparnis resultiert. Ein weiterer Aspekt kann sein, dass dadurch eine höhere Magnetkraft bei gleichbleibenden Materialeinsatz für die Permanentmagnete erzielt werden kann.

Unter einer höheren magnetischen Flussdichte des Magnetfelds der Magnet-Einrichtung an oder durch die erste Seite als an oder durch die zweite Seite kann verstanden werden, dass die Feldlinien der Permanentmagneten auf der ersten Seite enger zusammengerückt sind als die Feldlinien der Permanentmagneten auf der zweiten Seite.

Die erste Seite und die zweite Seite können einander entgegengesetzt angeordnet sein. Die Anzahl von Permanentmagneten können derart angeordnet sein, dass das Magnetfeld der Magnet-Einrichtung an der ersten Seite konzentriert wird und das Magnetfeld der Magnet-Einrichtung an der zweiten Seite abgeschwächt und/oder annähernd aufgehoben wird.

In einer Weiterbildung des Magnetgreifers sind die Anzahl von Permanentmagneten in einer Halbach-Reihe oder in einer Halbach-Matrix angeordnet. Hierdurch kann besonders einfach erreicht werden, dass die magnetische Flussdichte des Magnetfelds der Magnet-Einrichtung an oder durch die erste Seite höher ist als an oder durch die zweite Seite. Die Permanentmagnet-Reihe kann als Halbach-Reihe ausgebildet sein. Die Permanentmagnet-Matrix kann als Halbach-Matrix ausgebildet sein.

Unter einer Halbach-Reihe kann ein Halbach-Array verstanden werden. Die Halbach-Matrix kann durch ein nebeneinander Anordnen von mehreren Halbach-Reihen gebildet sein. Jede Halbach-Reihe der Halbach-Matrix kann sich entlang einer Längsachse erstrecken. Die Längsachsen der Halbach-Reihen der Halbach-Matrix können parallel zueinander ausgerichtet sein.

In einer Weiterbildung des Magnetgreifers weist die Magnet-Einrichtung eine erste Magnet-Einheit, die aus mindestens einem Permanentmagneten gebildet ist, und eine zweite Magnet-Einheit, die aus mindestens einem Permanentmagneten gebildet ist, auf. Die Überführungs-Einrichtung ist dazu ausgebildet, die erste Magnet-Einheit unabhängig von der zweiten Magnet-Einheit zwischen einem Aktivzustand und einem Passivzustand zu überführen. Die Überführungs-Einrichtung ist dazu ausgebildet, die zweite Magnet-Einheit unabhängig von der ersten Magnet-Einheit zwischen einem Aktivzustand und einem Passivzustand zu überführen. Der Magnetgreifer weist den Freigabezustand auf, wenn die erste Magnet-Einheit und die zweite Magnet-Einheit jeweils den Passivzustand aufweisen. Der Magnetgreifer weist den Greifzustand auf, wenn die erste Magnet-Einheit und/oder die zweite Magnet-Einheit den Aktivzustand aufweisen.

Vorteilhafterweise kann dadurch die Magnetkraft, die das ferromagnetische Werkstück gegen die Werkstück-Kontaktfläche drückt, gesteuert werden. Beispielsweise kann auf das ferromagnetische Werkstück eine größere Magnetkraft wirken, wenn die erste Magnet-Einheit und die zweite Magnet-Einheit den Aktivzustand aufweisen, als wenn die erste Magnet-Einheit den Aktivzustand und die zweite Magnet-Einheit den Passivzustand oder die erste Magnet-Einheit den Passivzustand und die zweite Magnet-Einheit den Aktivzustand aufweisen. Dadurch kann erreicht werden, dass mit dem Magnetgreifer sowohl empfindliche als auch unempfindliche ferromagnetische Werkstücke gegriffen werden können.

Die Steuereinrichtung kann dazu ausgebildet sein, das Überführen der ersten Magnet-Einheit und/oder der zweiten Magnet-Einheit zwischen dem Aktivzustand und dem Passivzustand durch Ansteuern der Überführungs-Einrichtung zu initiieren und/oder zu steuern.

In dem Aktivzustand einer Magnet-Einheit kann ein Abstand zwischen der Magnet-Einheit und der Werkstück-Kontaktfläche geringer sein als in dem Passivzustand der Magnet-Einheit.

Die erste Magnet-Einheit und die zweite Magnet-Einheit können eine gleiche Anzahl von Permanentmagneten aufweisen. Die erste Magnet-Einheit kann aus 2, 3, 4, 5 oder 6 Permanentmagneten und/oder die zweite Magnet-Einheit kann aus 2, 3, 4, 5 oder 6 Permanentmagneten gebildet sein.

Der Magnetgreifer kann mehr als die beiden Magnet-Einheiten aufweisen.

In einer Weiterbildung des Magnetgreifers weist der Magnetgreifer eine Magnetgreifer-Schnittstelle zum lösbaren Befestigen eines weiteren Magnetgreifers an dem Magnetgreifer auf. Die Magnetgreifer-Schnittstelle kann vorteilhafterweise ein besonders einfaches und schnelles Befestigen des Magnetgreifers und des weiteren Magnetgreifers miteinander ermöglichen. Vorteilhafterweise kann dadurch eine Anpassung an einer Größe des ferromagnetischen Werkstücks ermöglicht werden, wodurch große ferromagnetische Werkstücke gegriffen werden können.

Der Magnetgreifer und der weitere Magnetgreifer können baugleich ausgebildet sein.

Die Magnetgreifer-Schnittstelle kann eine Gewindebohrung und/oder ein Durchgangsloch zum Herstellen einer Schraubverbindung zwischen dem Magnetgreifer und den weiteren Magnetgreifer für das lösbare Befestigen der beiden Magnetgreifer miteinander aufweisen. Das Gehäuse des Magnetgreifers kann die Magnetgreifer-Schnittstelle aufweisen.

Die Magnetgreifer-Schnittstelle kann dazu ausgebildet sein, den weiteren Magnetgreifer über den Magnetgreifer mit Energie, insbesondere elektrische Energie, und/oder Druckluft zu versorgen.

Die Magnetgreifer-Schnittstelle kann dazu ausgebildet sein, den Magnetgreifer und den weiteren, insbesondere baugleichen, Magnetgreifer relativ zueinander auszurichten. Beispielsweise kann die Magnetgreifer-Schnittstelle dazu ausgebildet sein, den Magnetgreifer und den weiteren Magnetgreifer derart miteinander zu befestigen, dass die Werkstück-Kontaktfläche des Magnetgreifers und eine Werkstück-Kontaktfläche des weiteren Magnetgreifers in einer, insbesondere gemeinsamen, Ebene angeordnet sind. Alternativ kann die Magnetgreifer-Schnittstelle dazu ausgebildet sein, den Magnetgreifer und den weiteren Magnetgreifer derart miteinander zu befestigen, dass eine Kontur einer Werkstück-Kontaktfläche des Magnetgreifers und eine Kontur einer Werkstück-Kontaktfläche des weiteren Magnetgreifers zumindest teilweise einer Kontur des ferromagnetischen Werkstücks folgen.

In einer Weiterbildung des Magnetgreifers weist der Magnetgreifer eine Anzahl, beispielsweise 1, 2 oder 4, von Greifern zum Greifen des ferromagnetischen Werkstücks auf. Jeder Greifer ist zum magnetfeldlosen Greifen des ferromagnetischen Werkstücks ausgebildet. Vorteilhafterweise kann dadurch der Magnetgreifer neben dem Greifen des ferromagnetischen Werkstücks mittels einer Magnetkraft weitere Greifprinzipien verwirklichen.

Insbesondere muss nicht jeder Greifer als Magnetgreifer ausgebildet sein. Für jeden der Greifer ist denkbar, dass er als ein Saug-Greifer zum Greifen des ferromagnetischen Werkstücks mittels eines Unterdrucks ausgebildet ist. Jeder Greifer kann in die Permanentmagnet-Matrix integriert sein. Beispielsweise kann an einer Stelle der Permanentmagnet-Matrix, an der mindestens ein Permanentmagnet vorgesehen wäre, ein Greifer angeordnet sein. Alternativ kann der Magnetgreifer eine Dichtschnur zum Kontaktieren des ferromagnetischen Werkstücks und für das Bilden eines Unterdruck-Bereichs des Magnetgreifers aufweisen. Der Unterdruck-Bereich kann mit dem Unterdruck beaufschlagbar sein, so dass das ferromagnetische Werkstück durch den Unterdruck gegen die Dichtschnur und gegen die Werkstück-Kontaktfläche des Magnetgreifers gesaugt wird.

Eine erfindungsgemäße Magnetgreifer-Vorrichtung ist zum Greifen eines ferromagnetischen Werkstücks geeignet. Die Magnetgreifer-Vorrichtung weist eine Magnetgreifstelle, einen ersten Magnetgreifer wie zuvor beschrieben und einen zweiten Magnetgreifer wie zuvor beschrieben auf. Die Magnetgreifstelle ist zum Greifen des ferromagnetischen Werkstücks ausgebildet. Der erste Magnetgreifer und der zweite Magnetgreifer sind unter Bildung der Magnetgreifstelle nebeneinander angeordnet. Vorteilhafterweise können dadurch die beiden Magnetgreifer wie ein einziger Magnetgreifer wirken. Insbesondere kann dadurch erreicht werden, dass das ferromagnetische Werkstück mit einer Magnetkraft greifbar ist, die gleich der Summe der Magnetkräfte der beiden Magnetgreifer ist. Dadurch kann das ferromagnetische Werkstück mit einer größeren Magnetkraft gegriffen werden.

Der erste Magnetgreifer und der zweite Magnetgreifer können baugleich ausgebildet sein. Der erste Magnetgreifer und der zweite Magnetgreifer können unter Ausbildung eines berührenden Kontakts nebeneinander angeordnet sein. Insbesondere können der erste Magnetgreifer und der zweite Magnetgreifer derart nebeneinander angeordnet sein, dass sich die beiden Magnetgreifer einander berühren.

Der erste Magnetgreifer und der zweite Magnetgreifer können derart nebeneinander angeordnet sein, dass die Werkstück-Kontaktfläche des ersten Magnetgreifers und die Werkstück-Kontaktfläche des zweiten Magnetgreifers in einer, insbesondere gemeinsamen, Ebene angeordnet sind. Alternativ kann der erste Magnetgreifer und der zweite Magnetgreifer derart nebeneinander angeordnet, dass eine Kontur der Werkstück-Kontaktfläche des ersten Magnetgreifers und eine Kontur der Werkstück-Kontaktfläche des zweiten Magnetgreifers zumindest teilweise der Kontur des ferromagnetischen Werkstücks folgen.

Die Werkstück-Kontaktfläche des ersten Magnetgreifers kann von der Werkstück-Kontaktfläche des zweiten Magnetgreifers mit einem Kontaktflächen-Abstand der Magnetgreifer-Vorrichtung beabstandet sein. Der Kontaktflächen-Abstand kann kleiner sein als ein Durchmesser des ersten Magnetgreifers und/oder ein Durchmesser des zweiten Magnetgreifers. Insbesondere kann der Kontaktflächen-Abstand ein Betrag aufweisen, der kleiner ist als 5 cm, insbesondere 3 cm, 2 cm oder 1 cm.

Die Magnetgreifstelle kann durch die Werkstück-Kontaktfläche des ersten Magnetgreifers und die Werkstück-Kontaktfläche des zweiten Magnetgreifers gebildet sein. Die Werkstück-Kontaktfläche des ersten Magnetgreifers und die Werkstück-Kontaktfläche des zweiten Magnetgreifers können zur Bildung der Magnetgreifstelle in einer Ebene angeordnet sein.

Der erste Magnetgreifer kann an dem zweiten Magnetgreifer, insbesondere mittels einer Schraubverbindung, lösbar befestigt sein. Vorzugsweise kann der zweite Magnetgreifer mittels der Magnetgreifer-Schnittstelle des ersten Magnetgreifers an dem ersten Magnetgreifer lösbar befestigt sein. Durch das lösbare Befestigen des ersten Magnetgreifers an dem zweiten Magnetgreifer kann die Magnetgreiferstelle gebildet werden.

Der erste Magnetgreifer und der zweite Magnetgreifer können derart nebeneinander angeordnet sein, dass, wenn die Anzahl von Permanentmagneten des ersten Magnetgreifers in der Halbach-Reihe oder in der Halbach-Matrix angeordnet sind, die Anzahl von Permanentmagneten des zweiten Magnetgreifers eine Fortsetzung der Halbach-Reihe oder der Halbach-Matrix der Anzahl von Permanentmagneten des ersten Magnetgreifers bilden.

Ein weiterer Aspekt der Magnetgreifer-Vorrichtung kann sein, dass die Magnet-Vorrichtung ein vollflächiges Greifen des ferromagnetischen Werkstücks ermöglicht.

In einer Weiterbildung der Magnetgreifer-Vorrichtung überlagern sich ein Magnetfeld der Magnet-Einrichtung des ersten Magnetgreifers in dem Greifzustand und ein Magnetfeld der Magnet-Einrichtung des zweiten Magnetgreifers in dem Greifzustand einander. Vorteilhafterweise kann dadurch in dem Greifzustand der beiden Magnetgreifer eine Unterbrechung zwischen dem Magnetfeld des ersten Magnetgreifers und dem Magnetfeld des zweiten Magnetgreifers vermieden werden. Dadurch können die Magnetfelder der beiden Magnetgreifer in dem Greifzustand wie ein einziges Magnetfeld wirken. Vorteilhafterweise kann damit eine auf das ferromagnetische Werkstück wirkende reduzierte Magnetkraft in einem Übergang zwischen dem ersten Magnetgreifer und dem zweiten Magnetgreifer vermieden werden. Deshalb kann das mit der Magnetgreifer-Vorrichtung gegriffene ferromagnetische Werkstück besonders sicher mit der Magnetgreifer-Vorrichtung gegriffen werden.

Das Magnetfeld der Magnet-Einrichtung des ersten Magnetgreifers in dem Greifzustand und das Magnetfeld der Magnet-Einrichtung des zweiten Magnetgreifers in dem Greifzustand können sich derart einander überlagern, dass das Magnetfeld des zweiten Magnetgreifers in dem Greifzustand eine Fortsetzung des Magnetfelds des ersten Magnetgreifers in dem Greifzustand bildet.

In einer Weiterbildung der Magnetgreifer-Vorrichtung weist die Magnetgreifer-Vorrichtung eine Vielzahl, beispielsweise 3, 4, 5, 9 oder 16, von Magnetgreifern wie zuvor beschrieben auf. Die Vielzahl von Magnetgreifern sind unter Bildung einer Magnetgreifer-Reihe angeordnet. Vorteilhafterweise kann dadurch die Magnetgreifer-Vorrichtung wie ein einziger linienartiger Magnetgreifer wirken.

Die Vielzahl von Magnetgreifern können baugleich ausgebildet sein. Die Vielzahl von Magnetgreifern können unter Bildung der Magnetgreifstelle nebeneinander angeordnet sein. Die Magnetgreifstelle kann linienartig ausgebildet sein. Die Magnetgreifer-Reihe kann einen linearen Verlauf aufweisen. Die Magnetgreifer können derart nebeneinander angeordnet sein, dass alle Werkstück-Kontaktflächen der Magnetgreifer in einer einzigen Ebene liegen. Alternativ können die Magnetgreifer derart nebeneinander angeordnet sein, dass die Konturen der Werkstück-Kontaktflächen der Magnetgreifer zumindest teilweise einer Kontur des ferromagnetischen Werkstücks folgen.

Die Werkstück-Kontaktflächen von zwei benachbarten Magnetgreifern können mit dem Kontaktflächen-Abstand voneinander beabstandet sein.

Eine Länge der Magnetgreifer-Reihe kann gleich oder größer als einer Länge des ferromagnetischen Werkstücks sein. Dadurch kann die Magnetkraft, die auf das mit der Magnetgreifer-Vorrichtung gegriffene ferromagnetische Werkstück wirkt, über die gesamte Länge des ferromagnetischen Werkstücks konstant und/oder gleichmäßig verteilt sein. Dies kann das sichere und zuverlässige Greifen von besonders labilen Werkstücken, beispielsweise von sehr dünnen Blechen, ermöglichen.

In einer Weiterbildung der Magnetgreifer-Vorrichtung weist die Magnetgreifer-Vorrichtung eine Vielzahl, beispielsweise 3, 4, 5, 9 oder 16, von Magnetgreifern wie zuvor beschrieben auf. Die Vielzahl von Magnetgreifern sind unter Bildung einer Magnetgreifer-Matrix angeordnet. Vorteilhafterweise kann dadurch die Magnetgreifer-Vorrichtung wie ein einziger flächenartiger Magnetgreifer wirken.

Unter der Magnetgreifer-Matrix kann ein Magnetgreifer-Raster oder ein Magnetgreifer-Gitter verstanden werden.

Die Magnetgreifstelle kann flächenartig ausgebildet sein. Die Magnetgreifer-Matrix kann durch das Anordnen der Vielzahl von Magnetgreifern in Zeilen und Spalten gebildet sein. Die Magnetgreifer-Matrix kann in einer Ebene angeordnet sein. Die Magnetgreifer können derart nebeneinander angeordnet sein, dass alle Werkstück-Kontaktflächen der Magnetgreifer in einer einzigen Ebene liegen. Alternativ können die Magnetgreifer derart nebeneinander angeordnet sein, dass die Konturen der Werkstück-Kontaktflächen der Magnetgreifer zumindest teilweise einer Kontur des ferromagnetischen Werkstücks folgen.

Die Werkstück-Kontaktflächen von zwei benachbarten Magnetgreifern können mit dem Kontaktflächen-Abstand voneinander beabstandet sein.

Eine Länge und eine Breite der Magnetgreifer-Matrix kann gleich oder größer als eine Länge und eine Breite des ferromagnetischen Werkstücks sein. Dadurch kann die Magnetkraft, die auf das mit der Magnetgreifer-Vorrichtung gegriffene ferromagnetische Werkstück wirkt, über die gesamte Länge und Breite des ferromagnetischen Werkstücks konstant und/oder gleichmäßig verteilt sein. Dies kann das sichere und zuverlässige Greifen von besonders labilen Werkstücken, beispielsweise von sehr dünnen Blechen, ermöglichen.

Eine erfindungsgemäße Greif-Vorrichtung ist zum Greifen eines ferromagnetischen Werkstücks ausgebildet. Die Greif-Vorrichtung weist eine Mehrzahl, beispielsweise 2, 4 oder 6, von Magnetgreifern wie zuvor beschrieben und/oder eine Mehrzahl, beispielsweise 2, 4 oder 6, von Magnetgreifer-Vorrichtungen wie zuvor beschrieben auf. Die Mehrzahl von Magnetgreifern und/oder die Mehrzahl von Magnetgreifer-Vorrichtungen sind unter Bildung eines Greifbereichs in einer Greif-Reihe oder in einer Greif-Matrix angeordnet.

Die Mehrzahl von Magnetgreifern und/oder die Mehrzahl von Magnetgreifer-Vorrichtungen können in der Greif-Reihe oder in der Greif-Matrix angeordnet sein, wenn die Magnetgreifer und/oder die Magnetgreifer-Vorrichtungen nicht wie ein einziger Magnetgreifer wirken. Insbesondere können sich die Magnetfelder der Magnetgreifer und/oder die Magnetfelder der Magnetgreifer-Vorrichtungen der Greif-Reihe oder der Greif-Matrix sich nicht derart überlagern, dass das Magnetfeld eines Magnetgreifers oder einer Magnetgreifer-Vorrichtung eine Fortsetzung eines Magnetfelds eines weiteren Magnetgreifers oder einer weiteren Magnetgreifer-Vorrichtung der Greif-Reihe oder der Greif-Matrix bildet. Vorzugsweise können die Anzahl von Permanentmagneten eines Magnetgreifers oder einer Magnetgreifer-Vorrichtung der Greif-Reihe oder der Greif-Matrix keine Fortsetzung einer Halbach-Reihe oder einer Halbach-Matrix der Permanentmagneten eines weiteren Magnetgreifers oder einer weiteren Magnetgreifer-Vorrichtung der Greif-Reihe oder der Greif-Matrix bilden.

Die Greif-Reihe kann durch Anordnen der Mehrzahl von Magnetgreifern und/oder der Mehrzahl von Magnetgreifer-Vorrichtungen in einer Reihe gebildet sein.

Die Greif-Matrix kann durch Anordnen der Mehrzahl von Magnetgreifern und/oder der Mehrzahl von Magnetgreifer-Vorrichtung in Zeilen und Spalten gebildet sein.

Die Mehrzahl von Magnetgreifern und/oder die Mehrzahl von Magnetgreifer-Vorrichtungen können für das Bilden der Greif-Reihe oder der Greif-Matrix mit einem Greif-Abstand voneinander beabstandet sein. Der Greif-Abstand kann größer sein als 15 cm, insbesondere 20 cm, 30 cm oder 50 cm.

Die Werkstück-Kontaktflächen der Magnetgreifer können innerhalb des Greifbereichs angeordnet sein. Der Greifbereich kann durch die innenliegenden Werkstück-Kontaktflächen der Magnetgreifer begrenzt sein. Die Werkstück-Kontaktflächen der Magnetgreifer können in einer Ebene angeordnet sein. Alternativ können die Konturen der Werkstück-Kontaktflächen der Magnetgreifer zumindest teilweise einer Kontur des ferromagnetischen Werkstücks folgen.

Ein erfindungsgemäßes Greif-System weist einen Magnetgreifer wie zuvor besprochen, eine Magnetgreif-Vorrichtung wie zuvor besprochen und/oder eine Greif-Vorrichtung wie zuvor besprochen und das ferromagnetische Werkstück auf. Eine Breite und/oder eine Länge des ferromagnetischen Werkstücks ist gleich oder kleiner als eine Breite und/oder eine Länge der Werkstück-Kontaktfläche des Magnetgreifers, eine Breite und/oder eine Länge der Magnetgreifstelle der Magnetgreif-Vorrichtung oder eine Breite und/oder eine Länge des Greifbereichs der Greif-Vorrichtung. Vorteilhafterweise kann dadurch ein ungewünschtes Durchbiegen des ferromagnetischen Werkstücks vermieden werden.

Weitere Vorteile und vorteilhafte Ausgestaltungen der Erfindung sind den Figuren, deren Beschreibung und den Ansprüchen entnehmbar. Alle in den Figuren, deren Beschreibung und den Ansprüchen offenbarten Merkmale können sowohl einzeln als auch in beliebiger Kombination miteinander erfindungswesentlich sein. Es zeigen:
- Fig. 1: eine schematische Darstellung eines Magnetgreifers mit einer Magnet-Einrichtung in einem Freigabezustand,
- Fig. 2: eine schematische Darstellung des Magnetgreifers von Fig. 1 mit der Magnet-Einrichtung in einem Greifzustand,
- Fig. 3: eine schematische Darstellung einer Anordnung von Permanentmagneten der Magnet-Einrichtung des Magnetgreifers von Fig. 1,
- Fig. 4: eine schematische Darstellung eines weiteren Ausführungsbeispiels eines Magnetgreifers mit einer Magnet-Einrichtung in einem Freigabezustand,
- Fig. 5: eine schematische Darstellung des Magnetgreifers von Fig. 4 mit der Magnet-Einrichtung in einem Greifzustand,
- Fig. 6: eine schematische Darstellung einer Anordnung von Permanentmagneten der Magnet-Einrichtung des Magnetgreifers von Fig. 4,
- Fig. 7: eine schematische Darstellung eines weiteren Ausführungsbeispiels eines Magnetgreifers,
- Fig. 8: eine schematische Darstellung des Magnetgreifers von Fig. 7, wobei jede Magnet-Einheit der Magnet-Einrichtung einen Aktivzustand aufweist,
- Fig. 9: eine schematische Darstellung des Magnetgreifers von Fig. 7, wobei zwei Magnet-Einheiten der Magnet-Einrichtung den Aktivzustand und eine Magnet-Einheit der Magnet-Einrichtung einen Passivzustand aufweisen,
- Fig. 10: eine schematische Darstellung eines weiteren Ausführungsbeispiels eines Magnetgreifers,
- Fig. 11: eine schematische Darstellung einer Anordnung von Permanentmagneten einer Magnet-Einrichtung des Magnetgreifers von Fig. 10,
- Fig. 12: eine schematische Darstellung eines weiteren Ausführungsbeispiels eines Magnetgreifers,
- Fig. 13: eine schematische Darstellung einer Magnetgreifer-Vorrichtung, die den Magnetgreifer von Fig. 1 und den Magnetgreifer von Fig. 7 aufweist,
- Fig. 14: eine schematische Darstellung einer Greif-Vorrichtung, und
- Fig. 15: eine schematische Darstellung eines Greif-Systems mit dem Magnetgreifer von Fig. 7.

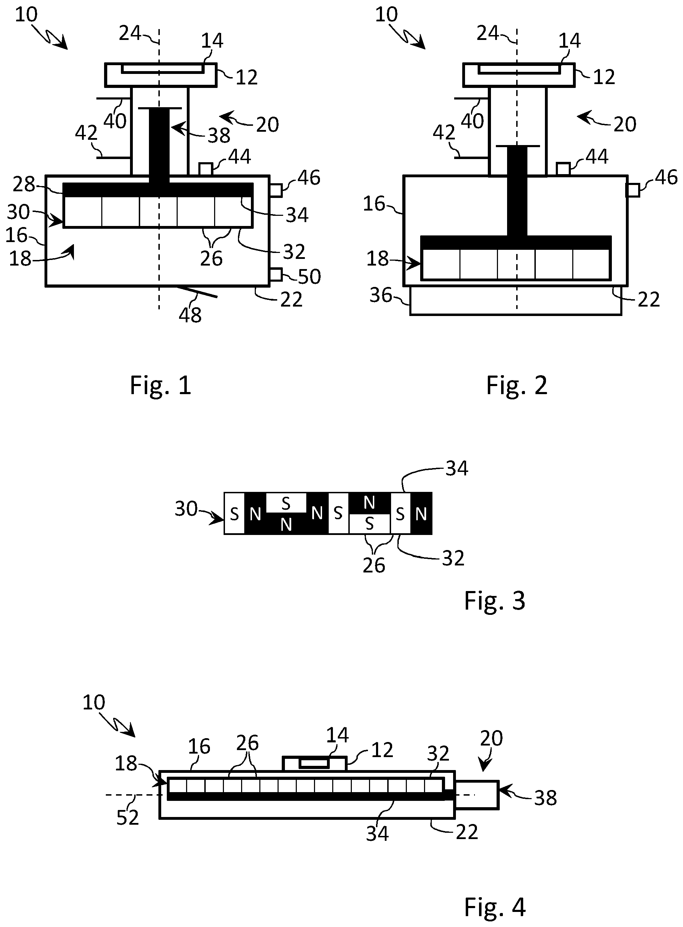

Fig. 1 zeigt einen Magnetgreifer 10 in einer schematischen Schnittansicht.

Der Magnetgreifer 10 hat eine Adapterplatte 12 mit einer Handhabungs-Schnittstelle 14 zum Befestigen des Magnetgreifers 10 an einer Handhabungsvorrichtung. Die Handhabungsvorrichtung kann beispielsweise ein Manipulator, insbesondere in Form eines Roboterarms, sein.

Die Handhabungs-Schnittstelle 14 ist eine Schnellkupplung in Form eines Bajonettverschlusses. Mittels der Handhabungs-Schnittstelle 14 kann der Magnetgreifer 10 an die Handhabungsvorrichtung ohne Werkzeug befestigt werden.

Der Magnetgreifer 10 ist zum Greifen eines ferromagnetischen Werkstücks geeignet. Das ferromagnetische Werkstück kann aus Eisen oder Stahl gebildet sein. Das Werkstück kann ein Blech oder eine Materialtafel sein.

Der Magnetgreifer 10 hat ein Gehäuse 16, eine Magnet-Einrichtung 18, eine Überführungs-Einrichtung 20 und eine Werkstück-Kontaktfläche 22.

Die Magnet-Einrichtung 18 und die Überführungs-Einrichtung 20 sind in dem Gehäuse 16 angeordnet. Das Gehäuse 16 ist aus Aluminium gebildet. Das Gehäuse 16 ist länglich ausgebildet. Das Gehäuse 16 erstreckt sich entlang einer Längsachse 24 des Gehäuses 16. Die Längsachse 24 des Gehäuses 16 kann auch als Längsachse des Magnetgreifers 10 bezeichnet werden. Die Längsachse 24 ist orthogonal zur Werkstück-Kontaktfläche 22 ausgerichtet.

Das Gehäuse 16 bildet die Werkstück-Kontaktfläche 22. Insbesondere bildet eine ebene Fläche des Gehäuses 16 die Werkstück-Kontaktfläche 22. Die Werkstück-Kontaktfläche 22 ist eine Stirnfläche des Magnetgreifers 10. Die Werkstück-Kontaktfläche 22 ist dazu vorgesehen, das ferromagnetische Werkstück zu kontaktieren.

Die Magnet-Einrichtung 18 hat fünf Permanentmagnete 26. Jeder Permanentmagnet 26 hat einen Nordpol und einen Südpol. Jeder Permanentmagnet 26 erzeugt ein Magnetfeld, das sich von dem Nordpol zu dem Südpol des Permanentmagneten 26 erstreckt. Die Magnetfelder aller Permanentmagneten 26 der Magnet-Einrichtung 18 bilden das Magnetfeld der Magnet-Einrichtung 18.

Die Permanentmagnete 26 sind an einer Magnetaufnahme 28 der Magnet-Einrichtung 18, insbesondere in Form einer Platte, befestigt. Jeder Permanentmagnet 26 hat mindestens einen berührenden Kontakt zu einem benachbarten Permanentmagneten 26. Anders formuliert, zwei benachbarte Permanentmagnete 26 weisen zwischen sich einen berührenden Kontakt auf. Die Permanentmagnete 26 sind unter Bildung einer Permanentmagnet-Reihe 30 aneinandergereiht. Ein Verlauf der Permanentmagnet-Reihe 30 ist parallel zu der Werkstück-Kontaktfläche 22.

Die Permanentmagnet-Reihe 30 hat eine im Greifzustand der Werkstück-Kontaktfläche 22 zugewandte erste Seite 32 und eine im Greifzustand der Werkstück-Kontaktfläche 22 abgewandte zweite Seite 34. Die erste Seite 32 und die zweite Seite 34 sind einander entgegengesetzt ausgerichtet. Die Permanentmagnete sind derart aneinandergereiht, dass eine magnetische Flussdichte des Magnetfelds der Magnet-Einrichtung 18 an oder durch die erste Seite 32 höher ist als eine magnetische Flussdichte der Magnet-Einrichtung 18 an oder durch die zweite Seite 34.

Fig. 3 zeigt eine Seitenansicht der Permanentmagnet-Reihe 30 mit dargestellten Südpol und Nordpol der Permanentmagneten 26. Der Südpol und der Nordpol der Permanentmagneten 26 ist derart ausgerichtet, dass die Permanentmagnet-Reihe 30 eine Halbach-Reihe bildet. Dadurch wird erreicht, dass das Magnetfeld der Magnet-Einrichtung 18 an der ersten Seite 32 konzentriert wird und das Magnetfeld der Magnet-Einrichtung an der zweiten Seite 34 abgeschwächt und/oder annähernd aufgehoben wird.

Die Magnet-Einrichtung 18 ist zwischen einem Greifzustand zum Greifen des ferromagnetischen Werkstücks und einem Freigabezustand zum Freigeben des ferromagnetischen Werkstücks überführbar.

In dem Greifzustand ist der Magnetgreifer 10 dazu ausgebildet, mittels der Magnet-Einrichtung 18 ein Magnetfeld zu erzeugen, das ein Beaufschlagen des ferromagnetischen Werkstücks mit einer auf die Werkstück-Kontaktfläche 22 gerichteten Magnetkraft bewirkt, die größer ist als eine Gewichtskraft des ferromagnetischen Werkstücks. Durch die Magnetkraft wird das ferromagnetische Werkstück gegen die Werkstück-Kontaktfläche 22 gedrückt.

In dem Freigabezustand erzeugt die Magnet-Einrichtung 18 kein Magnetfeld, das dazu ausgebildet ist, das ferromagnetische Werkstück mit einer auf die Werkstück-Kontaktfläche 22 gerichteten Magnetkraft zu beaufschlagen, die größer als eine Gewichtskraft des ferromagnetischen Werkstücks ist. Dadurch kann das ferromagnetische Werkstück von der Werkstück-Kontaktfläche 22 gelöst werden.

Fig. 1 zeigt den Magnetgreifer 10 mit der Magnet-Einrichtung 18 in dem Freigabezustand und Fig. 2 zeigt den Magnetgreifer 10 mit der Magnet-Einrichtung 18 in dem Greifzustand. Weiter zeigt Fig. 2, dass ein ferromagnetisches Werkstück 36 an der Werkstück-Kontaktfläche 22 angeordnet ist. Durch das Magnetfeld der Magnet-Einrichtung 18 wirkt auf das ferromagnetische Werkstück 36 eine Magnetkraft, die größer ist als die Gewichtskraft des ferromagnetischen Werkstücks 36. Dadurch ist das ferromagnetische Werkstück 36 von dem Magnetgreifer 10 gegriffen.

Das ferromagnetische Werkstück 36 ist kleiner als die Werkstück-Kontaktfläche 22. Dadurch wird eine gleichmäßige Verteilung der Magnetkraft über das gesamte ferromagnetischen Werkstück 36 erreicht.

Die Magnet-Einrichtung 18 ist in dem Gehäuse 16 parallel zur Längsachse 24 des Gehäuses 16 linear verschiebbar gelagert.

Die Magnet-Einrichtung 18 wird durch eine gerade Translationsbewegung, die auf die Werkstück-Kontaktfläche 22 zu gerichtet ist, in den Greifzustand überführt. Dadurch werden die Permanentmagnete 26 derart nah an die Werkstück-Kontaktfläche 22 platziert, dass das Magnetfeld der Permanentmagneten 26 die Werkstück-Kontaktfläche 22 durchdringt und das ferromagnetische Werkstück 36, das an der Werkstück-Kontaktfläche 22 angeordnet ist, mit der Magnetkraft beaufschlagt, die größer als die Gewichtskraft des ferromagnetischen Werkstücks 36 ist.

Die Magnet-Einrichtung 18 wird durch eine gerade Translationsbewegung, die von der Werkstück-Kontaktfläche 22 weg gerichtet ist, in den Freigabezustand überführt. Dadurch werden die Permanentmagnete 26 derart von der Werkstück-Kontaktfläche 22 entfernt platziert, dass das Magnetfeld der Permanentmagneten 26 das ferromagnetische Werkstück 36, das an der Werkstück-Kontaktfläche 22 angeordnet ist, nicht mit einer Magnetkraft beaufschlagen kann, die größer als eine Gewichtskraft des ferromagnetischen Werkstücks 36 ist.

Die Überführungs-Einrichtung 20 ist zum Überführen der Magnet-Einrichtung 18 zwischen dem Greifzustand und dem Freigabezustand ausgebildet. In dem dargestellten Ausführungsbeispiel ist die Überführungs-Einrichtung 20 dazu ausgebildet, die Magnet-Einrichtung 18 pneumatisch zwischen dem Greifzustand und dem Freigabezustand zu bewegen.

Die Überführung der Magnet-Einrichtung 18 zwischen dem Greifzustand und dem Freigabezustand erfolgt mittels eines Aktuators 38 der Überführungs-Einrichtung 20. Der Aktuator 38 ist ein pneumatischer Antrieb. Der Aktuator 38 hat einen Kolben, der mit der Magnet-Einrichtung 18 verbunden ist. Das Gehäuse 16 hat einen ersten Anschluss 40 und einen zweiten Anschluss 42. Die beiden Anschlüsse 40, 42 sind jeweils dazu ausgebildet, den Magnetgreifer 10 mit einer Druckluftversorgung zu verbinden. Die beiden Anschlüsse 40, 42 haben jeweils eine Öffnung zum Einleiten von Gas, insbesondere Druckluft, in das Gehäuse 16, um den Kolben und damit die Magnet-Einrichtung 18 zwischen dem Freigabezustand und dem Greifzustand überzuführen.

Durch das Zuführen von Gas über den ersten Anschluss 40 wird das Gas in einen Gehäuseabschnitt oberhalb des Kolbens eingeleitet und übt auf den Kolben einen Druck aus. Dadurch wirkt eine auf die Werkstück-Kontaktfläche 22 gerichtete Kraft auf den Kolben. Als Reaktion darauf bewegt sich der Kolben und die Magnet-Einrichtung 18 parallel zu der Längsachse 24 auf die Werkstück-Kontaktfläche 22 zu, bis die Magnet-Einrichtung 18 den Greifzustand einnimmt.

Durch das Zuführen von Gas über den zweiten Anschluss 42 wird das Gas in einen Gehäuseabschnitt unterhalb des Kolbens eingeleitet und übt auf den Kolben einen Druck aus. Dadurch wirkt eine von der Werkstück-Kontaktfläche 22 weg gerichtete Kraft auf den Kolben. Als Reaktion darauf bewegt sich der Kolben und die Magnet-Einrichtung 18 parallel zu der Längsachse 24 von der Werkstück-Kontaktfläche 22 weg, bis die Magnet-Einrichtung 18 den Freigabezustand einnimmt.

Der Magnetgreifer 10 hat eine Steuereinrichtung 44 zum Steuern der Überführungs-Einrichtung 20. Die Steuereinrichtung 44 ist ein Mikrocontroller. Die Steuereinrichtung 44 ist dazu ausgebildet, das Zuführen von Gas über den ersten Anschluss 40 oder über den zweiten Anschluss 42 zu initiieren und/oder zu steuern.

Der Magnetgreifer 10 hat einen Detektor 46 zum Erfassen einer Position der Magnet-Einrichtung 18. Die Steuereinrichtung 44 ist dazu ausgebildet, das Zuführen von Gas über den ersten Anschluss 40 oder über den zweiten Anschluss 42 in Abhängigkeit von der mittels des Detektors 46 erfassten Position der Magnet-Einrichtung 18 zu steuern.

Wenn beispielsweise die Steuereinrichtung 44 ein Signal für das Überführen der Magnet-Einrichtung 18 in den Greifzustand empfängt, kann die Steuereinrichtung 44 eine Zufuhr von Gas zum Überführen der Magnet-Einrichtung 18 in den Greifzustand initiieren, falls die mit dem Detektor 46 erfasste Position der Magnet-Einrichtung 18 nicht der Greifzustand ist. Falls die mit dem Detektor 46 erfasste Position der Magnet-Einrichtung 18 der Greifzustand ist, kann die Steuereinrichtung 44 die Zufuhr von Gas nicht initiieren.

Wenn beispielsweise die Steuereinrichtung 44 ein Signal für das Überführen der Magnet-Einrichtung 18 in den Freigabezustand empfängt, kann die Steuereinrichtung 44 eine Zufuhr von Gas zum Überführen der Magnet-Einrichtung 18 in den Freigabezustand initiieren, falls die mit dem Detektor 46 erfasste Position der Magnet-Einrichtung 18 nicht der Freigabezustand ist. Falls die mit dem Detektor 46 erfasste Position der Magnet-Einrichtung 18 der Freigabezustand ist, kann die Steuereinrichtung 44 die Zufuhr von Gas nicht initiieren.

Der Magnetgreifer 10 hat eine Sensor-Einrichtung 48 mit einem Anwesenheitssensor. Die Sensor-Einrichtung 48 ist dazu ausgebildet, zu erfassen, ob das ferromagnetische Werkstück 36 die Werkstück-Kontaktfläche 22 kontaktiert oder nicht. Der Anwesenheitssensor ist ein mechanischer Taster, der von dem ferromagnetischen Werkstück 36 betätigt wird, wenn das ferromagnetische Werkstück 36 die Werkstück-Kontaktfläche 22 kontaktiert.

Die Steuereinrichtung 44 ist dazu ausgebildet, das Überführen der Magnet-Einrichtung 18 zwischen dem Greifzustand und dem Freigabezustand in Abhängigkeit von der mit der Sensor-Einrichtung 48 detektierten Anwesenheit des ferromagnetischen Werkstücks 36 zu initiieren und/oder zu steuern.

Wenn beispielsweise die Steuereinrichtung 44 ein Signal für das Überführen der Magnet-Einrichtung 18 in den Greifzustand empfängt, kann die Steuereinrichtung 44 die Zufuhr von Gas nicht initiieren und/oder steuern, falls mittels der Sensor-Einrichtung 48 detektiert wird, dass das ferromagnetische Werkstück 36 nicht die Werkstück-Kontaktfläche 22 kontaktiert.

Wenn beispielsweise die Steuereinrichtung 44 ein Signal für das Überführen der Magnet-Einrichtung 18 in den Greifzustand empfängt, kann die Steuereinrichtung 44 eine Zufuhr von Gas zum Überführen der Magnet-Einrichtung 18 in den Greifzustand initiieren und/oder steuern, falls mittels der Sensor-Einrichtung 48 detektiert wird, dass das ferromagnetische Werkstück 36 die Werkstück-Kontaktfläche 22 kontaktiert.

An dem Gehäuse 16 des Magnetgreifers 10 ist eine Magnetgreifer-Schnittstelle 5o des Magnetgreifers 10 zum lösbaren Befestigen eines weiteren, baugleichen Magnetgreifers angeordnet. Die Magnetgreifer-Schnittstelle 50 hat eine Gewindebohrung und ein Durchgangsloch zum Herstellen von Schraubverbindungen zwischen dem Magnetgreifer 10 und den weiteren Magnetgreifer für das lösbare Befestigen der beiden Magnetgreifer miteinander.

Die Magnetgreifer-Schnittstelle 50 kann dazu ausgebildet sein, den weiteren Magnetgreifer mit Druckluft für das Überführen des weiteren Magnetgreif zwischen dem Freigabezustand und dem Greifzustand zu versorgen.

In Fig. 4 bis 6 ist ein weiteres Ausführungsbeispiel des Magnetgreifers 10 der Fig. 1 bis 3 gezeigt, wobei für identische und funktionell äquivalente Elemente gleiche Bezugszeichen verwendet sind und insoweit auf die obigen Ausführungen zum Ausführungsbeispiel der Fig. 1 bis 3 verwiesen werden kann, so dass im Wesentlichen nur auf die bestehenden Unterschiede eingegangen wird.

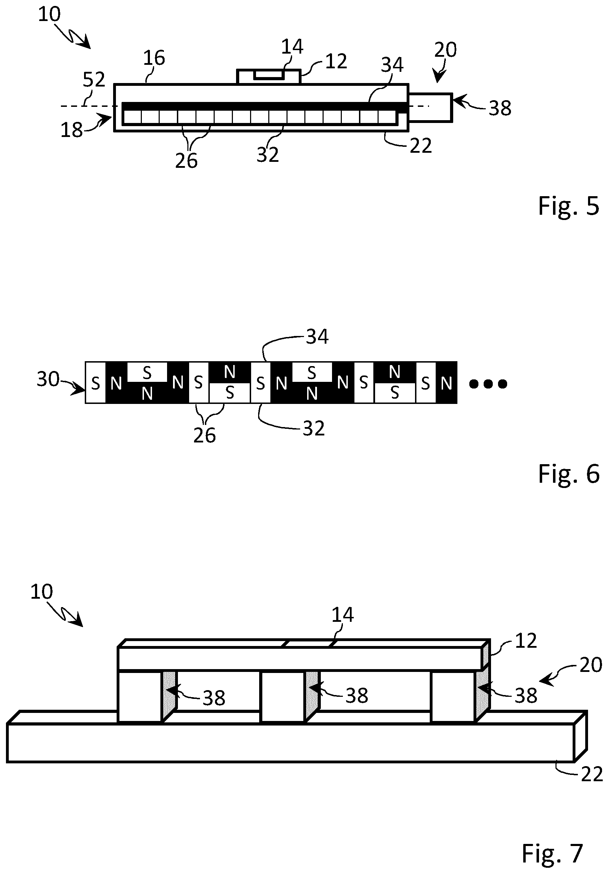

Fig. 4 zeigt den Magnetgreifer 10 in dem Freigabezustand und Fig. 5 zeigt den Magnetgreifer 10 in dem Greifzustand.

Die Magnet-Einrichtung 18 ist drehbeweglich um eine Querachse 52 des Magnetgreifers 10, gelagert. Die Querachse 52 verläuft parallel zu der Werkstück-Kontaktfläche 22. Die Querachse 52 kann einen derartigen Verlauf aufweisen, dass die Querachse 52 die Permanentmagnete 26 nicht schneidet. Anders formuliert, die Permanentmagnete 26 können in Bezug auf die Querachse 52 exzentrisch angeordnet sein. Dadurch können die Permanentmagnete 26 zu der Werkstück-Kontaktfläche 22 hingedreht oder weggedreht werden.

In dem Greifzustand können die Permanentmagnete 26 zu der Werkstück-Kontaktfläche 22 hingedreht sein. In dem Freigabezustand können die Permanentmagnete 26 von der Werkstück-Kontaktfläche 22 weggedreht sein. Anders formuliert, in dem Greifzustand kann die erste Seite 32 der Permanentmagnet-Reihe 30 zwischen der Werkstück-Kontaktfläche 22 und der zweiten Seite 34 angeordnet sein. In dem Freigabezustand kann die zweite Seite 34 der Permanentmagnet-Reihe 30 zwischen der Werkstück-Kontaktfläche 22 und der ersten Seite 32 angeordnet sein.

Der Aktuator 38 der Überführungs-Einrichtung 20 ist ein elektrischer Antrieb in Form eines Elektromotors. Der Aktuator 38 treibt eine Rotationsbewegung der Magnet-Einrichtung 18 an. Mittels des Aktuators 38 wird durch die Rotationsbewegung die Magnet-Einrichtung 18 zwischen dem Greifzustand und Freigabezustand überführt. Jede Rotationsbewegung für das Überführen der Magnet-Einrichtung 18 zwischen dem Greifzustand und dem Freigabezustand kann eine Rotation aller Permanentmagneten 26 um 180° bewirken.

Die Magnet-Einrichtung 18 hat fünfzehn Permanentmagnete 26. Eine Seitenansicht eines Ausschnitts der Permanentmagnet-Reihe 30 ist in Fig. 6 gezeigt. Die Permanentmagnet-Reihe 30 ist eine Halbach-Reihe.

In Fig. 7 bis 9 ist ein weiteres Ausführungsbeispiel der Magnetgreifer 10 der Fig. 1 bis 6 gezeigt, wobei für identische und funktionell äquivalente Elemente gleiche Bezugszeichen verwendet sind und insoweit auf die obigen Ausführungen zu den Ausführungsbeispielen der Fig. 1 bis 6 verwiesen werden kann, so dass im Wesentlichen nur auf die bestehenden Unterschiede eingegangen wird.

Fig. 7 zeigt den Magnetgreifer 10. Die Überführungs-Einrichtung 20 hat drei Aktuatoren 38 zum Überführen der Magnet-Einrichtung 18 zwischen dem Greifzustand und dem Freigabezustand. Die Aktuatoren 38 sind linear in eine Reihe angeordnet. Die Reihe kann als Aktuatoren-Reihe bezeichnet werden. Zwei benachbarte Aktuatoren 38 können mit einem Abstand voneinander beabstandet sein.

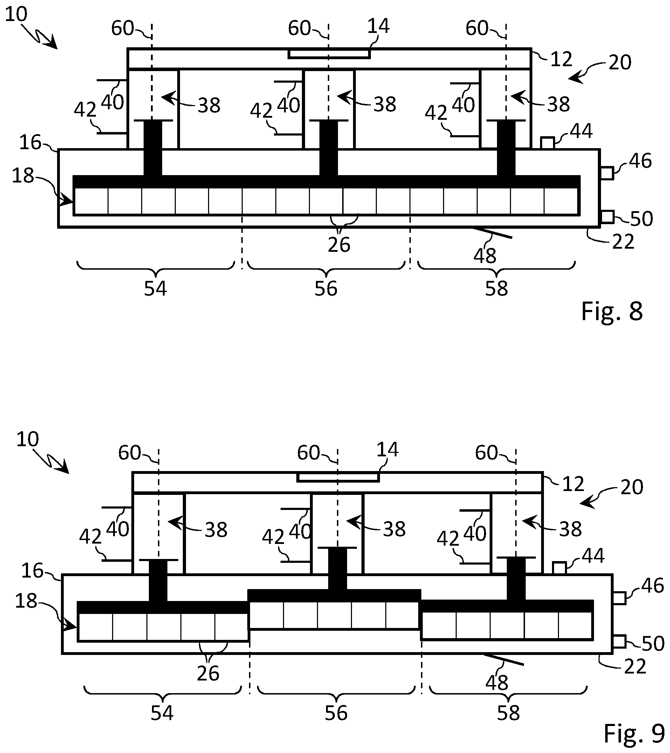

Fig. 8 und 9 zeigen den Magnetgreifer 10 von Fig. 7 jeweils in einer schematischen Schnittansicht.

Die Magnet-Einrichtung 18 weist eine erste Magnet-Einheit 54, eine zweite Magnet-Einheit 56 und eine dritte Magnet-Einheit 58 auf. Jede Magnet-Einheit 54, 56, 58 ist aus fünf Permanentmagneten 26 der Magnet-Einrichtung 18 gebildet.

Die Überführungs-Einrichtung 20 ist dazu ausgebildet, jede Magnet-Einheit 54, 56, 58 unabhängig von den übrigen Magnet-Einheiten 54, 56, 58 zwischen einem Aktivzustand und einem Passivzustand zu überführen.

Die drei Aktuatoren 38 sind zum Überführen der Magnet-Einheiten 54, 56, 58 zwischen dem Aktivzustand und den Passivzustand vorgesehen. Jeder Aktuator 38 ist einer der Magnet-Einheiten 54, 56, 58 zugeordnet. Jeder Aktuator 38 ist als pneumatischer Antrieb ausgebildet wie zuvor zum Ausführungsbeispiel der Fig. 1 bis 3 besprochen. Jeder Aktuator 38 kann die ihm zugeordnete Magnet-Einheit 54, 56, 58 durch eine Bewegung entlang einer zu der Werkstück-Kontaktfläche 22 orthogonal ausgerichteten Achse 60 zwischen dem Aktivzustand und den Passivzustand überführen.

In dem Aktivzustand einer Magnet-Einheit 54, 56, 58 ist ein Abstand zwischen der Magnet-Einheit 54, 56, 58 und der Werkstück-Kontaktfläche 22 geringer als in dem Passivzustand der Magnet-Einheit 54, 56, 58.

Fig. 9 zeigt die erste Magnet-Einheit 54 und die dritte Magnet-Einheit 58 jeweils in dem Aktivzustand und die zweite Magnet-Einheit 56 dem Passivzustand.

Durch das Einstellen der Aktivzustände und Passivzustände der Magnet-Einheiten 54, 56, 58 kann die in dem Greifzustand auf das ferromagnetische Werkstück 36 wirkende Magnetkraft eingestellt werden.

Beispielsweise kann definiert werden, dass der Magnetgreifer 10 den Greifzustand aufweist, wenn die erste Magnet-Einheit 54 und die dritte Magnet-Einheit 58 jeweils den Aktivzustand und die zweite Magnet-Einheit 56 dem Passivzustand aufweist. Alternativ kann definiert werden, dass der Magnetgreifer 10 den Greifzustand aufweist, wenn alle Magnet-Einheiten 54, 56, 58 jeweils den Aktivzustand aufweisen. Dadurch kann der Magnetgreifer 10 besonders gut auf die Anforderungen des ferromagnetischen Werkstücks 36 eingestellt werden.

Der Magnetgreifer 10 weist den Freigabezustand auf, wenn alle Magnet-Einheiten 54, 56, 58 jeweils den Passivzustand aufweisen.

Die Steuereinrichtung 44 ist dazu ausgebildet, das Überführen jeder Magnet-Einheit 54, 56, 58 zwischen dem Aktivzustand und dem Passivzustand durch Ansteuern der Überführungs-Einrichtung 20 zu initiieren und/oder zu steuern.

Wenn alle Magnet-Einheiten 54, 56, 58 jeweils den Aktivzustand oder den Passivzustand aufweisen, sind die Permanentmagnete 26 in der Permanentmagnet-Reihe 30 angeordnet. Die Permanentmagnet-Reihe 30 ist eine Halbach-Reihe.

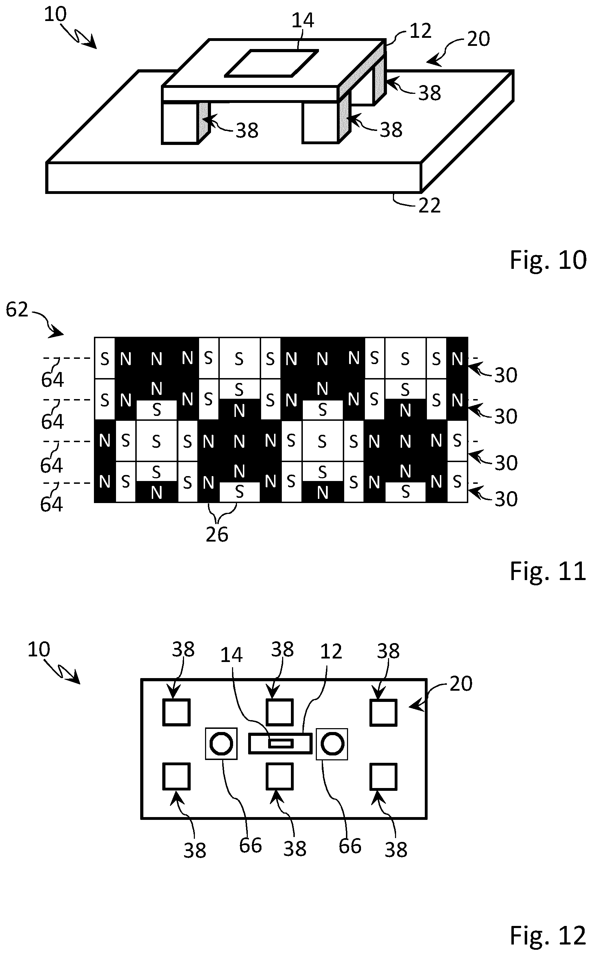

In Fig. 10 und 11 ist ein weiteres Ausführungsbeispiel der Magnetgreifer 10 der Fig. 1 bis 9 gezeigt, wobei für identische und funktionell äquivalente Elemente gleiche Bezugszeichen verwendet sind und insoweit auf die obigen Ausführungen zu den Ausführungsbeispielen der Fig. 1 bis 9 verwiesen werden kann, so dass im Wesentlichen nur auf die bestehenden Unterschiede eingegangen wird.

Fig. 10 zeigt den Magnetgreifer 10. Die Überführungs-Einrichtung 20 hat vier Aktuatoren 38 zum Überführen der Magnet-Einrichtung 18 zwischen dem Greifzustand und dem Freigabezustand. Die Aktuatoren 38 sind in einer rechteckförmigen Anordnung, insbesondere quadratische Anordnung, angeordnet. Eine derartige regelmäßige Anordnung kann als Aktuatoren-Matrix bezeichnet werden.

Der Magnetgreifer 10 hat vier Magnet-Einheiten 54, die unabhängig voneinander mittels den vier Aktuatoren 38 zwischen dem Aktivzustand und dem Passivzustand überführbar sind.

Fig. 11 zeigt eine Draufsicht auf die Permanentmagnete 26 des Magnetgreifers 10 in dem Greifzustand mit Blickrichtung von der Werkstück-Kontaktfläche 22 auf die Permanentmagnete 26.

Die Permanentmagnete 26 sind in einer Permanentmagnet-Matrix 62 angeordnet. Die Permanentmagnet-Matrix 62 ist eine Halbach-Matrix. Die Halbach-Matrix ist durch ein nebeneinander Anordnen von mehreren Permanentmagnet-Reihen 30 gebildet, die jeweils eine Halbach-Reihe sind. Jede Permanentmagnet-Reihe 3o der Halbach-Matrix erstreckt sich entlang einer Längsachse 64. Die Längsachsen 64 der Permanentmagnet-Reihen 30 sind parallel zueinander ausgerichtet. Die Längsachsen 64 der Permanentmagnet-Reihen 30 definieren eine Ebene, die parallel zu der Werkstück-Kontaktfläche 22 ist.

In Fig. 12 ist ein weiteres Ausführungsbeispiel der Magnetgreifer 10 der Fig. 1 bis 11 gezeigt, wobei für identische und funktionell äquivalente Elemente gleiche Bezugszeichen verwendet sind und insoweit auf die obigen Ausführungen zu den Ausführungsbeispielen der Fig. 1 bis 11 verwiesen werden kann, so dass im Wesentlichen nur auf die bestehenden Unterschiede eingegangen wird.

Der Magnetgreifer 10 der Fig. 12 ist in einer Draufsicht mit Blickrichtung auf die Handhabungs-Schnittstelle 14 schematisch dargestellt.

Die Überführungs-Einrichtung 20 hat sechs Aktuatoren 38 zum Überführen der Magnet-Einrichtung 18 zwischen dem Greifzustand und dem Freigabezustand. Die Aktuatoren 38 sind in einer regelmäßigen Anordnung, insbesondere Aktuatoren-Matrix, angeordnet.

Der Magnetgreifer 10 hat sechs Magnet-Einheiten 54, die unabhängig voneinander mittels den sechs Aktuatoren 38 zwischen dem Aktivzustand und dem Passivzustand überführbar sind.

Der Magnetgreifer 10 hat zwei Greifer 66 zum Greifen des ferromagnetischen Werkstücks 36. Jeder Greifer 66 ist nicht als Magnetgreifer ausgebildet. Jeder Greifer 66 ist als ein Saug-Greifer zum Greifen des ferromagnetischen Werkstücks 36 mittels eines Unterdrucks ausgebildet. Jeder Greifer 66 ist mit einem Unterdruck zum Greifen des ferromagnetischen Werkstücks 36 beaufschlagbar. Durch den Unterdruck wird das ferromagnetische Werkstücks 36 gegen die Werkstück-Kontaktfläche 22 gesaugt.

Die beiden Greifer 66 sind in der Permanentmagnet-Matrix 62 integriert. Insbesondere ist jeder Greifer 66 derart in die Permanentmagnet-Matrix 62 integriert, dass zumindest ein Permanentmagnet der Permanentmagnet-Matrix 62 durch den Greifer 66 ersetzt ist.

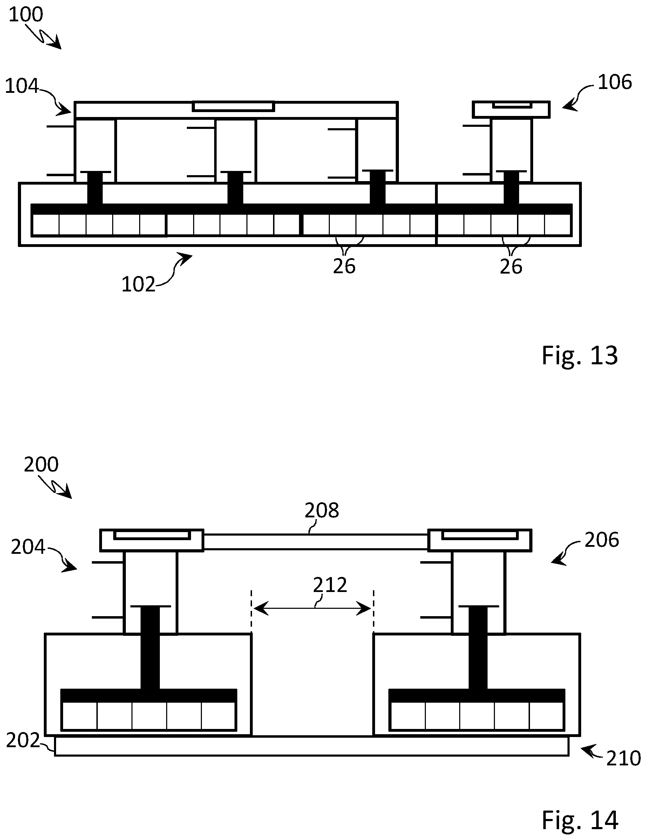

Fig. 13 zeigt eine Magnetgreifer-Vorrichtung 100.

Die Magnetgreifer-Vorrichtung 100 weist eine Magnetgreifstelle 102 zum Greifen des ferromagnetischen Werkstücks 36, einen ersten Magnetgreifer 104 und einen zweiten Magnetgreifer 106 auf. Der erste Magnetgreifer 104 und der zweite Magnetgreifer 106 sind unter Bildung der Magnetgreifstelle 102 nebeneinander angeordnet. Dadurch wirken die beiden Magnetgreifer 104, 106 wie ein einziger Magnetgreifer.

Eine Länge und/oder eine Breite der Magnetgreifstelle 102 kann gleich oder größer als eine Länge und/oder eine Breite des zu greifenden ferromagnetischen Werkstücks sein.

Der erste Magnetgreifer 104 ist baugleich zu dem Magnetgreifer 10 von Fig. 7 bis 9 und der zweite Magnetgreifer 106 ist baugleich zu dem Magnetgreifer 10 von Fig. 1 bis 3.

Der erste Magnetgreifer 104 und der zweite Magnetgreifer 106 sind mittels den Magnetgreifer-Schnittstellen 5o der beiden Magnetgreifer 104, 106 miteinander lösbar verbunden. Insbesondere ist der erste Magnetgreifer 104 an dem zweiten Magnetgreifer 106 mittels einer Schraubverbindung befestigt.

Mittels den Magnetgreifer-Schnittstellen 50 sind die beiden Magnetgreifer 104, 106 relativ zueinander ausgerichtet, so dass die Werkstück-Kontaktfläche 22 des ersten Magnetgreifers 104 und die Werkstück-Kontaktfläche 22 des zweiten Magnetgreifers 106 in einer Ebene angeordnet sind. Die Magnetgreifstelle 102 ist durch die Werkstück-Kontaktfläche 22 des ersten Magnetgreifers 104 und durch die Werkstück-Kontaktfläche 22 des zweiten Magnetgreifers 106 gebildet. Die beiden Magnetgreifer 104, 106 sind derart relativ zueinander ausgerichtet, dass die Werkstück-Kontaktfläche 22 des zweiten Magnetgreifers 106 an die Werkstück-Kontaktfläche 22 des ersten Magnetgreifers 104 angrenzt.

Der erste Magnetgreifer 104 und der zweite Magnetgreifer 106 sind derart nebeneinander angeordnet, dass in dem Freigabezustand und/oder in den Greifzustand der beiden Magnetgreifer 104, 106 die Permanentmagnete 26 des zweiten Magnetgreifers 106 eine Fortsetzung der Halbach-Reihe der Permanentmagneten 26 des ersten Magnetgreifers 104 bilden.

Der erste Magnetgreifer 104 und der zweite Magnetgreifer 106 sind derart nebeneinander angeordnet, dass sich das Magnetfeld der Magnet-Einrichtung 18 des ersten Magnetgreifers 104 in dem Greifzustand und ein Magnetfeld der Magnet-Einrichtung 18 des zweiten Magnetgreifers 106 in dem Greifzustand einander überlagern. Das Magnetfeld des zweiten Magnetgreifers 106 in dem Greifzustand bildet eine Fortsetzung des Magnetfelds des ersten Magnetgreifers 104 in dem Greifzustand. Dadurch wirken die Magnetfelder der beiden Magnetgreifer 104, 106 in dem Greifzustand wie ein Magnetfeld eines einzigen Magnetgreifers.

Der erste Magnetgreifer 104 und der zweite Magnetgreifer 106 sind derart nebeneinander angeordnet, dass die beiden Magnetgreifer 104, 106 eine Magnetgreifer-Reihe bilden. Dadurch ist die Magnetgreifstelle 102 linienartig ausgebildet.

In einem weiteren, nicht dargestellten Ausführungsbeispiel können der erste Magnetgreifer und der zweite Magnetgreifer baugleich ausgebildet sein.

In einem weiteren, nicht dargestellten Ausführungsbeispiel kann die Magnetgreifer-Vorrichtung mehr als die beiden Magnetgreifer aufweisen. Insbesondere kann die Magnetgreifer-Vorrichtung eine Vielzahl von Magnetgreifern aufweisen. Die Vielzahl von Magnetgreifern können eine einzige Magnetgreifstelle bilden.

In einem weiteren, nicht dargestellten Ausführungsbeispiel kann die Magnetgreifer-Vorrichtung mehr als die beiden Magnetgreifer aufweisen, wobei die Magnetgreifer unter Bildung einer Magnetgreifer-Matrix nebeneinander angeordnet sind. Dadurch kann die Magnetgreifstelle flächenartig ausgebildet sein. Eine Länge und eine Breite der Magnetgreifstelle kann gleich oder größer als eine Länge und eine Breite des zu greifenden ferromagnetischen Werkstücks sein.

Fig. 14 zeigt eine Greif-Vorrichtung 200 zum Greifen eines ferromagnetischen Werkstücks 202. Die Greif-Vorrichtung 200 weist einen ersten Magnetgreifer 204 und einen zweiten Magnetgreifer 206 auf. Der erste Magnetgreifer 204 und der zweite Magnetgreifer 206 sind jeweils baugleich zu dem Magnetgreifer 10 von Fig. 1 bis 3.

Die beiden Magnetgreifer 204, 206 sind mittels eines Rahmen 208 der Greif-Vorrichtung 200 miteinander verbunden.

Die beiden Magnetgreifer 204, 206 sind in einer Greif-Reihe unter Bildung eines Greifbereichs 210 angeordnet. Die Werkstück-Kontaktfläche 22 des ersten Magnetgreifers 204 und die Werkstück-Kontaktfläche des zweiten Magnetgreifers 206 befinden sich innerhalb des Greifbereichs 210. Der Greifbereich 210 ist durch die innenliegenden Werkstück-Kontaktflächen 22 der beiden Magnetgreifer 204, 206 begrenzt. Die Werkstück-Kontaktflächen 22 der beiden Magnetgreifer 204, 206 sind in einer Ebene angeordnet. Eine Länge und/oder eine Breite des Greifbereichs 210 ist gleich oder größer als eine Länge und/oder eine Breite des zu greifenden ferromagnetischen Werkstücks 202.

Die beiden Magnetgreifer 204, 206 sind mit einem Greif-Abstand 212 voneinander beabstandet. Der Greif-Abstand 212 beträgt mehr als 15 cm. Dadurch grenzt die Werkstück-Kontaktfläche 22 des ersten Magnetgreifers 204 nicht an die Werkstück-Kontaktfläche 22 des zweiten Magnetgreifers 206 an und die Magnetfelder der Magnet-Einrichtungen 18 der beiden Magnetgreifer 204, 206 können sich in den Greifzuständen nicht einander überlagern. Dadurch können die Magnetfelder der beiden Magnetgreifer 204, 206 in den Greifzuständen nicht wie ein Magnetfeld eines einzigen Magnetgreifers wirken.

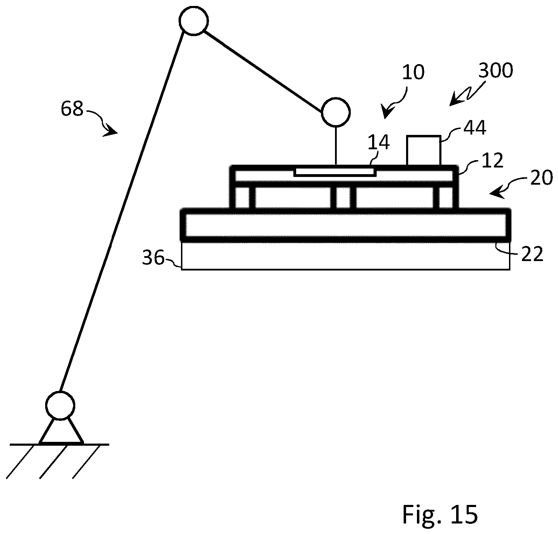

Fig. 15 zeigt eine Handhabungsvorrichtung 68 in Form eines Roboterarms. Der Magnetgreifer 10 von Fig. 7 ist mittels der Handhabungs-Schnittstelle 14 an der Handhabungsvorrichtung 68 befestigt. Mit dem Magnetgreifer 10 ist das ferromagnetische Werkstück 36 gegriffen. Der Magnetgreifer 10 und das gegriffene ferromagnetischen Werkstücks 36 bilden ein Greif-System 300. Eine Breite des ferromagnetischen Werkstücks 36 ist gleich einer Breite der Werkstück-Kontaktfläche 22 des Magnetgreifers 10. Eine Länge des ferromagnetischen Werkstücks 36 ist gleich einer Länge der Werkstück-Kontaktfläche 22 des Magnetgreifers 10.

## Patentansprüche

1. Magnetgreifer (10, 104, 106, 204, 2o6) zum Greifen eines ferromagnetischen Werkstücks (36, 202), aufweisend:
- eine Magnet-Einrichtung (18), die aus einer Anzahl von Permanentmagneten (26) mit jeweils einem Nordpol und einem Südpol gebildet ist, wobei die Magnet-Einrichtung (18) zwischen einem Greifzustand zum Greifen des ferromagnetischen Werkstücks (36, 202) und einem Freigabezustand zum Freigeben des ferromagnetischen Werkstücks (36, 202) überführbar ist,
- eine Überführungs-Einrichtung (20) zum Überführen der Magnet-Einrichtung (18) zwischen dem Greifzustand und dem Freigabezustand, und
- eine Werkstück-Kontaktfläche (22) zum Kontaktieren des ferromagnetischen Werkstücks (36, 202).

2. Magnetgreifer (10, 104, 106, 204, 206) nach Anspruch 1,
- wobei die Magnet-Einrichtung (18), insbesondere in dem Greifzustand, eine der Werkstück-Kontaktfläche (22) zugewandte erste Seite (32) und eine der Werkstück-Kontaktfläche (22) abgewandte zweite Seite (34) aufweist,
- wobei die Anzahl von Permanentmagneten (26) derart angeordnet sind, dass eine magnetische Flussdichte der Magnet-Einrichtung (18) an oder durch die erste Seite (32) höher ist als eine magnetische Flussdichte der Magnet-Einrichtung (18) an oder durch die zweite Seite (34).

3. Magnetgreifer (10, 104, 106, 204, 206) nach Anspruch 2,
- wobei die Anzahl von Permanentmagneten (26) in einer Halbach-Reihe oder in einer Halbach-Matrix angeordnet sind.

4. Magnetgreifer (10, 104, 106, 204, 2o6) nach einem der voranstehenden Ansprüche,
- wobei die Magnet-Einrichtung (18) eine erste Magnet-Einheit (54), die aus mindestens einem Permanentmagneten (26) gebildet ist, und eine zweite Magnet-Einheit (56), die aus mindestens einem Permanentmagneten (26) gebildet ist, aufweist,
- wobei die Überführungs-Einrichtung (20) dazu ausgebildet ist, die erste Magnet-Einheit (54) unabhängig von der zweiten Magnet-Einheit (56) zwischen einem Aktivzustand und einem Passivzustand zu überführen,
- wobei die Überführungs-Einrichtung (20) dazu ausgebildet ist, die zweite Magnet-Einheit (56) unabhängig von der ersten Magnet-Einheit (54) zwischen einem Aktivzustand und einem Passivzustand zu überführen,
- wobei die Magnet-Einrichtung (18) den Freigabezustand aufweist, wenn die erste Magnet-Einheit (54) und die zweite Magnet-Einheit (56) jeweils den Passivzustand aufweisen,
- wobei die Magnet-Einrichtung (18) den Greifzustand aufweist, wenn die erste Magnet-Einheit (54) und/oder die zweite Magnet-Einheit (56) den Aktivzustand aufweisen.

5. Magnetgreifer (10, 104, 106, 204, 2o6) nach einem der voranstehenden Ansprüche,
- wobei der Magnetgreifer (10, 104, 106, 204, 206) eine Magnetgreifer-Schnittstelle (50) zum lösbaren Befestigen eines weiteren Magnetgreifers an dem Magnetgreifer (10, 104, 106, 204, 206) aufweist.

6. Magnetgreifer (10, 104, 106, 204, 2o6) nach einem der voranstehenden Ansprüche,
- wobei der Magnetgreifer (10, 104, 106, 204, 2o6) eine Anzahl von Greifern (66) zum Greifen des ferromagnetischen Werkstücks (36, 202) aufweist,
- wobei jeder Greifer (66) zum magnetfeldlosen Greifen des ferromagnetischen Werkstücks (36, 202) ausgebildet ist.

7. Magnetgreifer-Vorrichtung (100) zum Greifen eines ferromagnetischen Werkstücks (36, 202), aufweisend:
- eine Magnetgreifstelle (102) zum Greifen des ferromagnetischen Werkstücks (36, 202),
- einen ersten Magnetgreifer (104) nach einem der voranstehenden Ansprüche, und
- einen zweiten Magnetgreifer (106) nach einem der voranstehenden Ansprüche,
- wobei der erste Magnetgreifer (104) und der zweite Magnetgreifer (106) unter Bildung der Magnetgreifstelle (102) nebeneinander angeordnet sind.

8. Magnetgreifer-Vorrichtung (100) nach Anspruch 7,
- wobei ein Magnetfeld der Magnet-Einrichtung (18) des ersten Magnetgreifers (104) in dem Greifzustand und ein Magnetfeld der Magnet-Einrichtung (18) des zweiten Magnetgreifers (106) in dem Greifzustand sich einander überlagern.

9. Magnetgreifer-Vorrichtung (100) nach Anspruch 7 oder 8,
- wobei die Magnetgreifer-Vorrichtung (100) eine Vielzahl von Magnetgreifern nach einem der voranstehenden Ansprüche 1 bis 6 aufweist,
- wobei die Vielzahl von Magnetgreifern unter Bildung einer Magnetgreifer-Reihe angeordnet sind.

10. Magnetgreifer-Vorrichtung (100) nach einem der vorherigen Ansprüche 7 bis 9,
- wobei die Magnetgreifer-Vorrichtung (100) eine Vielzahl von Magnetgreifern nach einem der voranstehenden Ansprüche 1 bis 6 aufweist,
- wobei die Vielzahl von Magnetgreifern unter Bildung einer Magnetgreifer-Matrix angeordnet sind.

11. Greif-Vorrichtung (200) zum Greifen eines ferromagnetischen Werkstücks (36, 202), aufweisend:
- eine Mehrzahl von Magnetgreifern (204, 206) nach einem der voranstehenden Ansprüchen 1 bis 6 und/oder eine Mehrzahl von Magnetgreifer-Vorrichtungen nach einem der voranstehenden Ansprüche 7 bis 10,
- wobei die Mehrzahl von Magnetgreifern (204, 206) und/oder die Mehrzahl von Magnetgreifer-Vorrichtungen unter Bildung eines Greifbereichs (210) zum Greifen des ferromagnetischen Werkstücks (202) in einer Greif-Reihe oder in einer Greif-Matrix angeordnet sind.

12. Greif-System (300), aufweisend:
- einen Magnetgreifer (10, 104, 106, 204, 2o6) nach einem der Ansprüche 1 bis 6, eine Magnetgreif-Vorrichtung (100) nach einem der Ansprüche 7 bis 10 und/oder eine Greif-Vorrichtung (200) nach Anspruch 11, und
- das ferromagnetische Werkstück (36, 202),
- wobei eine Breite und/oder eine Länge des ferromagnetischen Werkstücks (36, 202) gleich oder kleiner ist als eine Breite und/oder eine Länge der Werkstück-Kontaktfläche (22), als eine Breite und/oder eine Länge der Magnetgreifstelle (102) oder als eine Breite und/oder eine Länge des Greifbereichs (210).
